(19) Europäisches Patentamt / European Patent Office / Office européen des brevets

(11) **EP 4 290 800 B1**

(12) **EUROPEAN PATENT SPECIFICATION**

(45) Date of publication and mention
of the grant of the patent:
**30.07.2025 Bulletin 2025/31**

(21) Application number: **22778679.5**

(22) Date of filing: **22.03.2022**

(51) International Patent Classification (IPC):
*H04L 7/04* (2006.01)      *G06F 13/16* (2006.01)
*G06F 13/42* (2006.01)

(52) Cooperative Patent Classification (CPC):
**H04L 7/042;** G06F 13/1689; G06F 13/4278;
H04L 7/0008

(86) International application number:
**PCT/CN2022/082333**

(87) International publication number:
**WO 2022/206496 (06.10.2022 Gazette 2022/40)**

(54) **DATA SYNCHRONIZATION METHOD AND ELECTRONIC DEVICE**

DATENSYNCHRONISATIONSVERFAHREN UND ELEKTRONISCHE VORRICHTUNG

PROCÉDÉ DE SYNCHRONISATION DE DONNÉES ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2021 CN 202110329850**

(43) Date of publication of application:
**13.12.2023 Bulletin 2023/50**

(73) Proprietor: **Huawei Technologies Co., Ltd.**
**Shenzhen, Guangdong 518129 (CN)**

(72) Inventors:
- **ZHOU, Jianjun**
  **Shenzhen, Guangdong 518129 (CN)**
- **WU, Long**
  **Shenzhen, Guangdong 518129 (CN)**
- **YAN, Chuangao**
  **Xi'an, Shaanxi 710071 (CN)**
- **LIU, Maliang**
  **Xi'an, Shaanxi 710071 (CN)**
- **DI, Wei**
  **Shenzhen, Guangdong 518129 (CN)**
- **WANG, Tianpeng**
  **Shenzhen, Guangdong 518129 (CN)**
- **ZHU, Qinghao**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-2021/008070          CN-A- 103 384 401
CN-A- 104 065 397          CN-A- 107 070 496
CN-A- 108 199 993          US-A- 4 847 877
US-A1- 2015 003 570        US-A1- 2021 036 898

- ELDON J ED - PULKA ANDRZEJ ET AL: "APPLICATIONS OF THE DIGITAL CORRELATOR", MICROPROCESSORS AND MICROSYSTEMS, IPC BUSINESS PRESS LTD. LONDON, GB, vol. 12, no. 4, 1 May 1988 (1988-05-01), pages 214 - 223, XP000098953, ISSN: 0141-9331, DOI: 10.1016/0141-9331(88) 90166-4

## Description

This application claims priority to Chinese Patent Application No. 202110329850.6, filed with the China National Intellectual Property Administration on March 27, 2021 and entitled "DATA SYNCHRONIZATION METHOD AND ELECTRONIC DEVICE".

## TECHNICAL FIELD

This application relates to the field of mobile terminal technologies, and in particular, to a data synchronization method and an electronic device.

## BACKGROUND

In a process of transmitting data through a single-ended signal or a differential signal, a synchronization sequence may be used to determine whether current data transmission is interfered. A principle is as follows: Before transmitting payload data, a transmit end first transmits a synchronization sequence, where the synchronization sequence is known to both the transmit end and a receive end. After receiving the synchronization sequence, the receive end determines whether the received synchronization sequence is consistent with the known synchronization sequence. If the received synchronization sequence is consistent with the known synchronization sequence, synchronization succeeds, indicating that a current transmission environment is not interfered and the payload data can be transmitted; otherwise, the synchronization fails, the current transmission environment is interfered, and data transmission is interrupted in this case. It can be learned that in the foregoing synchronization manner, synchronization succeeds only when the received synchronization sequence is consistent with the known synchronization sequence, and a synchronization success probability is low.

For example, an MIPI D-PHY is a physical layer that may be applied to a mobile terminal product and that is of source synchronization (that is, has an independent clock lane), a high speed (a current protocol upper limit is 2.5 Gbps), low power consumption, and low costs, and is mainly configured to connect a display serial interface (display serial interface, DSI) and a camera serial interface (camera serial interface, CSI) to a central processing unit. The MIPI D-PHY supports two transmission modes: a low-power (LP) mode and a high-speed (HS) mode. The HS mode uses a form of the differential signal for burst data transmission, and the LP mode uses the single-ended signal for control instruction transmission.

However, with increasingly high integration of products such as a terminal mobile phone, a tablet computer, and a notebook computer, a coupling degree between a radio frequency system and a camera, display, and another component that use the MIPI D-PHY to transmit data is increasingly high, and the MIPI D-PHY is vulnerable to interference from the radio frequency system. For example, when the differential signal in the MIPI D-PHY is used for transmission, theoretically, common-mode noise externally coupled to a transmission channel may be canceled in a differential manner. However, because amplitudes of external noise coupled to a same pair of differential lines DP and DN may be different, or because impedance and electrical lengths of the differential lines DP and DN are asymmetric, the common-mode noise externally coupled to the transmission channel may be converted into differential-mode noise. As a result, it is difficult to cancel interference noise completely in a differential manner. When the interference noise is coupled to the MIPI D-PHY data transmission channel, a bit error may occur in the synchronization sequence. As a result, the receive end cannot accurately identify the synchronization sequence transferred by the transmit end. In other words, a probability that synchronization between the receive end and the transmit end succeeds is low due to a synchronization failure.

ELDON J ED - PULKA ANDRZEJ ET AL: "APPLICATIONS OF THE DIGITAL CORRELATOR", MICROPROCESSORS AND MICROSYSTEMS, IPC BUSINESS PRESS LTD. LONDON, GB, vol. 12, no. 4, 1 May 1988 (1988-05-01), pages 214-223, XP000098953, ISSN: 0141-9331, DOI: 10.1016/0141-9331(88)90166--4, provides an overview of digital correlation and demonstrates how correlation techniques can be applied to the detection of particular patterns in a data stream, to the synchronization of detectors in demodulation processes and to the determination of the time delay between two digital sequences.

US 2021/036898 A1 discloses of in some examples are methods, systems and machine-readable mediums which allow for more secure and robust synchronization by implementing synchronization systems with sequences that may include interspersed noise symbols. These systems, which still synchronize despite one or more noise symbols N in indeterminate positions that are not known by the recipient device during a synchronization attempt reduce the amount of failed synchronization attempts.

US 4,847,877 A discloses a method and an apparatus for the fast detection of a predetermined pattern of n bits embedded in a serial bit stream. The n bits are adjacent or regularly distributed over the bit stream, and form a unique word which may in particular be used as a synchronization pattern, the detection of which allows to conclude that a synchronization status has been reached within the signal detected at a reception node. The method consists in detecting first a synchronization root, which is a subset of n' consecutive bits of the unique word. Then, succeeding potential bits of the unique word are detected from the serial bit stream, and each potential bit of the unique word is compared to the corresponding bit of the stored unique word. At each match, a counter is incremented, and when the count of the consecutive matches reaches a predetermined number, the unique word is said to be detected. However, if a mismatch occurs in a comparison step before the right count is reached, it is immediately derived that the unique word has not yet been detected, and the search process is reset. Thus, a non-detection of the unique word can be evidenced very early and accordingly, a substantial amount of time can be saved in the detection, since in the average, it is not necessary to go through n comparison steps to conclude a non-detection of the unique word. The method and apparatus according to the disclosure find an advantageous application in the detection of a synchronization pattern included in a Time Division Multiplexed signal, said pattern comprising n bits distributed over the TDM signal in a predetermined sequence.

US 2015/003570 A1 discloses: High speed serial links are used in many applications as they provide high throughput with limited number of signals and input/output pins. Normally, the high speed links are established once at power up and rarely taken down except for maintenance purposes. When the high speed serial links are used for battery operated devices, the power consumption of these links becomes an important issue. Dynamic high speed serial link establishment and shutdown techniques are used in such application to keep the power consumption low. Frequent link establishment and shutdown may cause occasional link establishment failures leading to latencies and even complete failure to communicate between two entities. A method and apparatus are disclosed that enable robust link establishment for more reliable operation and reduced latency.

## SUMMARY

Embodiments of this application disclose a data synchronization method and an electronic device, so that when a maximum correlation peak between a received synchronization sequence and a preset synchronization sequence is not less than a determining threshold, it can be determined that synchronization between a receive end and a transmit end succeeds. In this way, it does not need to be determined that the synchronization between the receive end and the transmit end succeeds only when the received synchronization sequence is exactly the same as the preset synchronization sequence. Therefore, with the method, a probability of successful synchronization between the receive end and the transmit end can be increased.

According to a first aspect, an embodiment of this application provides a data synchronization method. The method is applied to a receive end, and the method includes: receiving a synchronization sequence from a transmit end, where the synchronization sequence is used for synchronization between the receive end and the transmit end; determining a maximum correlation peak between the received synchronization sequence and a preset synchronization sequence, where the preset synchronization sequence is the same as the synchronization sequence sent by the transmit end, and the maximum correlation peak indicates a similarity between the received synchronization sequence and the preset synchronization sequence; determining, when the maximum correlation peak between the received synchronization sequence and the preset synchronization sequence is not less than a determining threshold, that the synchronization between the receive end and the transmit end succeeds; and receiving valid payload data corresponding to the synchronization sequence from the transmit end.

In the foregoing data synchronization method, when the maximum correlation peak between the received synchronization sequence and the preset synchronization sequence is not less than the determining threshold, it may be determined that the synchronization between the receive end and the transmit end succeeds. In this way, a probability of successful synchronization between the receive end and the transmit end can be increased, and valid payload data can be transmitted at a high speed between the receive end and the transmit end.

With reference to the first aspect the determining the maximum correlation peak between the received synchronization sequence and the preset synchronization sequence comprises: determining a correlation peak between each subsequence of the received synchronization sequence and the preset synchronization sequence, where the subsequence is a sequence formed by first n characters in the received synchronization sequence, n is a positive integer not greater than P, P is a length of the received synchronization sequence, and the correlation peak between the subsequence and the preset synchronization sequence indicates a similarity between the subsequence and the preset synchronization sequence; and determining a maximum value of correlation peaks between all subsequences of the received synchronization sequence and the preset synchronization sequence as the maximum correlation peak between the received synchronization sequence and the preset synchronization sequence.

The receive end determines the maximum correlation peak from correlation peaks between subsequences of the received synchronization sequence and the preset synchronization sequence, where the maximum correlation peak may indicate the similarity between the received synchronization sequence and the preset synchronization sequence.

With reference to the first aspect, in some embodiments, an implementation in which the receive end determines the correlation peak between each subsequence of the received synchronization sequence and the preset synchronization sequence may be: determining a correlation value corresponding to each character in each subsequence of the received synchronization sequence, where the correlation value indicates whether two characters are the same, a correlation value corresponding to an $i^{th}$ character in an $m^{th}$ subsequence is a correlation value between the $i^{th}$ character in the $m^{th}$ subsequence and a $(P-m+i)^{th}$ character in the preset synchronization sequence, and i is a positive integer not greater than m; and adding correlation values in a correlation value set, to obtain the correlation peak between each subsequence and the preset synchronization sequence, where the correlation value set includes the correlation value corresponding to each character in each subsequence.

The receive end first determines the correlation value corresponding to each character in a subsequence of the received synchronization sequence, and may further determine that a correlation peak between the subsequence and the preset synchronization sequence is a sum of correlation values corresponding to all characters in the subsequence. In this way, the determined correlation peak may indicate an overall similarity between the subsequence and the preset synchronization sequence.

With reference to the first aspect, in some embodiments, a correlation value between an $i^{th}$ character in each subsequence and the $(P-m+i)^{th}$ character in the preset synchronization sequence is a product or an exclusive OR value of the $i^{th}$ character in each subsequence and the $(P-m+i)^{th}$ character in the preset synchronization sequence.

With reference to the first aspect, in some embodiments, the method further includes: When the maximum correlation peak between the received synchronization sequence and the preset synchronization sequence is less than the determining threshold, the receive end adjusts the determining threshold until an adjusted determining threshold is not greater than the maximum correlation peak or the adjusted determining threshold is not within a threshold range. An upper limit of the threshold range is the maximum correlation peak, and a lower limit of the threshold range is a second maximum value of the correlation peaks between all the subsequences of the received synchronization sequence and the preset synchronization sequence.

When the maximum correlation peak between the received synchronization sequence and the preset synchronization sequence is less than the determining threshold, the receive end adjusts the determining threshold to be not greater than the maximum correlation peak. In this way, when the maximum correlation peak is compared with the adjusted determining threshold, the maximum correlation peak between the received synchronization sequence and the preset synchronization sequence is less than or equal to the adjusted determining threshold, and synchronization between the receive end and the transmit end succeeds. Therefore, the receive end adjusts the determining threshold, so that the probability of successful synchronization between the receive end and the transmit end can be further increased.

With reference to the first aspect, in some embodiments, an initial value of the determining threshold is a value between the maximum value and the second maximum value of the correlation peaks between all subsequences of the preset synchronization sequence and the preset synchronization sequence.

The initial value of the determining threshold is set between the maximum value and the second maximum value of the correlation peaks of all subsequences of the preset synchronization sequence and the preset synchronization sequence. When the maximum correlation peak between the received synchronization sequence and the preset synchronization sequence is not less than the initial value of the determining threshold, it may indicate that the similarity between the received synchronization sequence and the preset synchronization sequence is high, that is, the received synchronization sequence has few bit errors.

With reference to the first aspect, in some embodiments, the synchronization sequence is at least one of a protocol sequence, a Barker code sequence, a pseudo-random code sequence, an m sequence, and a ZC sequence.

In the data synchronization method provided in this embodiment of this application, a type of a sequence in a synchronization sequence is not limited. In this way, application of the data synchronization method is more flexible.

According to a second aspect, an embodiment of this application provides an electronic device, including one or more processors, one or more memories, and one or more data transmission interfaces. The one or more data transmission interfaces and the one or more memories are separately coupled to the one or more processors. The one or more data transmission interfaces are configured to transmit data between a receive end and a transmit end. The one or more memories are configured to store computer program code, where the computer program code includes computer instructions. The processor is configured to invoke the computer instructions to perform the following operations: receiving, through the data transmission interface, a synchronization sequence from the transmit end, where the synchronization sequence is used for synchronization between the receive end and the transmit end; determining a maximum correlation peak between the received synchronization sequence and a preset synchronization sequence, where the preset synchronization sequence is the same as the synchronization sequence sent by the transmit end, and the maximum correlation peak indicates a similarity between the received synchronization sequence and the preset synchronization sequence; and determining, when the maximum correlation peak between the received synchronization sequence and the preset synchronization sequence is not less than a determining threshold, that the synchronization between the receive end and the transmit end succeeds; and receiving, through the data transmission interface, valid payload data corresponding to the synchronization sequence from the transmit end.

With reference to the second aspect, that the processor performs the determining a maximum correlation peak between the received synchronization sequence and a preset synchronization sequence includes: determining a correlation peak between each subsequence of the received synchronization sequence and the preset synchronization sequence, where the subsequence is a sequence formed by first n characters in the received synchronization sequence, n is a positive integer not greater than P, P is a length of the received synchronization sequence, and the correlation peak between the subsequence and the preset synchronization sequence indicates a similarity between the subsequence and the preset synchronization sequence; and determining a maximum value of correlation peaks between all subsequences of the received synchronization sequence and the preset synchronization sequence as the maximum correlation peak between the received synchronization sequence and the preset synchronization sequence.

With reference to the second aspect, in some embodiments, that the processor performs the determining a correlation peak between each subsequence of the received synchronization sequence and the preset synchronization sequence includes: determining a correlation value corresponding to each character in each subsequence of the received synchronization sequence, where the correlation value indicates whether two characters are the same, a correlation value corresponding to an $i^{th}$ character in an $m^{th}$ subsequence is a correlation value between the $i^{th}$ character in the $m^{th}$ subsequence and a $(P-m+i)^{th}$ character in the preset synchronization sequence, and i is a positive integer not greater than m; and adding correlation values in a correlation value set, to obtain the correlation peak between each subsequence and the preset synchronization sequence, where the correlation value set includes the correlation value corresponding to each character in each subsequence.

With reference to the second aspect, in some embodiments, a correlation value between an $i^{th}$ character in each subsequence and the $(P-m+i)^{th}$ character in the preset synchronization sequence is a product or an exclusive OR value of the $i^{th}$ character in each subsequence and the $(P-m+i)^{th}$ character in the preset synchronization sequence.

With reference to the second aspect, in some embodiments, the processor is further configured to: when the maximum correlation peak between the received synchronization sequence and the preset synchronization sequence is less than the determining threshold, adjust the determining threshold until an adjusted determining threshold is not greater than the maximum correlation peak or the adjusted determining threshold is not within a threshold range. An upper limit of the threshold range is the maximum correlation peak, and a lower limit of the threshold range is a second maximum value of the correlation peaks between all the subsequences of the received synchronization sequence and the preset synchronization sequence.

With reference to the second aspect, in some embodiments, an initial value of the determining threshold is a value between the maximum value and the second maximum value of the correlation peaks between all subsequences of the preset synchronization sequence and the preset synchronization sequence.

With reference to the second aspect, in some embodiments, the synchronization sequence is at least one of a protocol sequence, a Barker code sequence, a pseudo-random code sequence, an M sequence, and a ZC sequence.

According to a third aspect, an embodiment of this application provides a computer storage medium, including computer instructions. When the computer instructions are run on an electronic device, the electronic device is enabled to perform the data synchronization method according to the first aspect or any possible implementation of the first aspect.

It may be understood that both the electronic device provided in the second aspect and the computer-readable storage medium provided in the third aspect are configured to perform the method provided in the first aspect. Therefore, for beneficial effects that can be achieved by the method, refer to beneficial effects in the corresponding method. Details are not described herein again.

## BRIEF DESCRIPTION OF DRAWINGS

FIG. 1 is a schematic diagram of a data transmission process between a camera, a processor, and a display according to an embodiment of this application;
FIG. 2A is a schematic diagram of an MIPI D-PHY 200 according to an embodiment of this application;
FIG. 2B is a schematic diagram of a process of MIPI D-PHY high-speed data transmission from a stop state to a start of sending transmission data according to an embodiment of this application;
FIG. 3 is a schematic flowchart of a data synchronization method according to an embodiment;
FIG. 4A is a schematic diagram of a case in which a bit error occurs under noise impact in a transmission process of a synchronization sequence received by a receive end according to an embodiment;
FIG. 4B is a schematic diagram of comparison between a synchronization sequence received by a receive end at different moments and a preset synchronization sequence when there is no noise interference according to an embodiment;
FIG. 5 is a schematic diagram of calculating a correlation peak between an $m^{th}$ subsequence of a P-bit synchronization sequence and a preset synchronization sequence through a circuit according to an embodiment;
FIG. 6 is a schematic diagram of calculating a correlation peak between the fifth subsequence and a preset synchronization sequence when there is no noise interference according to an embodiment;

FIG. 7, FIG. 9, FIG. 10, FIG. 11, FIG. 12, and FIG. 13 are schematic diagrams of determining, by a receive end, correlation peaks between each subsequence of a received synchronization sequence and a preset synchronization sequence and corresponding determining thresholds when there is no noise interference and there is noise interference according to embodiments of the present invention;

FIG. 8 is another schematic diagram of calculating a correlation peak between an $m^{th}$ subsequence of a P-bit synchronization sequence and a preset synchronization sequence through a circuit according to an embodiment;

FIG. 14 is a schematic diagram of a correlation peak between each subsequence of a preset synchronization sequence and a preset synchronization sequence and an initial determining threshold in a case of using some Barker code of various lengths as preset synchronization sequences according to an embodiment;

FIG. 15 and FIG. 16 are schematic diagrams of maximum correlation peaks between some synchronization sequences including a plurality of groups of sequences and a preset synchronization sequence and corresponding determining thresholds according to an embodiment; and

FIG. 17 is a block diagram of a software structure of an example of an electronic device 100 according to an embodiment of this application.

## DESCRIPTION OF EMBODIMENTS

Terms used in the following embodiments of this application are merely intended to describe specific embodiments, but are not intended to limit this application. As used in the specification of this application and the appended claims, the singular expression "a", "an", "the", "the foregoing", "such a", or "this" is intended to also include a plural expression unless otherwise clearly indicated in the context. It should also be understood that, the term "and/or" used in this application indicates and includes any or all possible combinations of one or more associated listed items.

Technical terms in embodiments of this application are described below.

1. Data transmission interface

In embodiments of this application, the data transmission interface may be a mobile industry processor interface (mobile industry processor interface, MIPI), a low voltage differential signal (low voltage differential signal, LVDS) interface, a universal serial bus (universal serial bus, USB) interface, an embedded display port (Embedded Display Port), a serializer-deserializer (SerDes) interface, an LPDP, or the like.

The interfaces are described as follows.

The MIPI is an open standard and specification developed by the MIPI Alliance for mobile application processors. It is mainly standardization of internal interfaces (cameras, display interfaces, RF/baseband interfaces) of mobile phones, thereby reducing complexity of internal interfaces and improving design flexibility.

The LVDS is a low-swing differential signal technology, and enables a signal to be transmitted at a rate of several hundred Mbps on a pair of differential PCB lines or a balanced cable. The low-swing and low-current drive output achieves low noise and low power consumption.

The USB is a serial bus standard, and is also a technical specification of an input/output interface. It is widely applied to information communication products such as a personal computer and a mobile device, and is extended to other related fields such as a photographing device, a digital television (set top box), and a game console. The USB interface may be configured to connect to a charger to charge an electronic device, and may also be used to transmit data between the electronic device and a peripheral device.

The eDP is a next-generation panel interface technology developed by the Video Electronics Standards Institute to meet requirements of embedded display panels. It is used to replace the video graphics array (VGA) interface and digital video interface (DVI) used by applications in personal computer (PC), and replace the high-definition multimedia interface (HDMI).

The SerDes is a mainstream time division multiplexing (TDM) and point-to-point (P2P) serial communication technology. To be specific, a plurality of low-speed parallel signals are converted into high-speed serial signals at a transmit end, and the high-speed serial signals are transmitted through a transmission medium (an optical cable or a copper wire). Finally, the high-speed serial signals are converted back into the low-speed parallel signals at a receive end.

2. MIPI

The MIPI is a most mainstream video transmission interface specification in the mobile field, and may include an MIPI D-PHY, an MIPI C-PHY, an MIPI M-PHY, an MIPI A-PHY, and the like.

The MIPI D-PHY is a physical layer that is applied to a mobile terminal product and that is of source synchronization (that is, has an independent clock lane), a high speed (a current protocol upper limit is 2.5 Gbps), low power consumption, and low costs, and is mainly configured to connect a display serial interface (display serial interface, DSI) and a camera serial interface (camera serial interface, CSI) to a central processing unit.

The MIPI C-PHY is also a physical layer used to connect a display serial interface (display serial interface, DSI) and a camera serial interface (camera serial interface, CSI) to a central processing unit. The MIPI C-PHY is a voltage-driven type. Based on a difference between each two signals, the signals are weak, and because there is no independent synchronization signal line, a transmission distance needs to be short, and a differential wire pair cannot be routed.

The MIPI M-PHY is a high-speed serial physical layer that uses differential signals with embedded clocks. It provides two transmission modes with different bit signals and clock schemes, which are used for different bandwidth ranges, to achieve better performance in a wider data rate range. The peak transmission rate is 11.6 Gbps on one lane and 46.4 Gbps on four lanes. The high bandwidth of each lane can reduce a number of lanes required. The MIPI M-PHY is designed for data-intensive applications that require fast communication channels for high-resolution images, high video frame rates, and large displays or memories. It is a multifunctional physical layer that can interconnect components in a smartphone, a wearable device, a personal computer, or a large system (such as a car).

The MIPI A-PHY is a physical layer that belongs to a serializer-deserializer (SerDes) category. It is an asymmetric data link in a point-to-point topology, has capabilities such as high-speed unidirectional data and embedded bidirectional control data, and can enhance a power transmission capability on a same cable to perform long-distance transmission. The MIPI A-PHY may be used in automobile applications and the IoT field.

In embodiments of this application, an MIPI D-PHY is used as an example for description. It should be understood that the data synchronization method in this application may be applied to any one of the foregoing data transmission interfaces.

An application scenario of embodiments of this application is described below by using an example in which data is transmitted through an MIPI D-PHY.

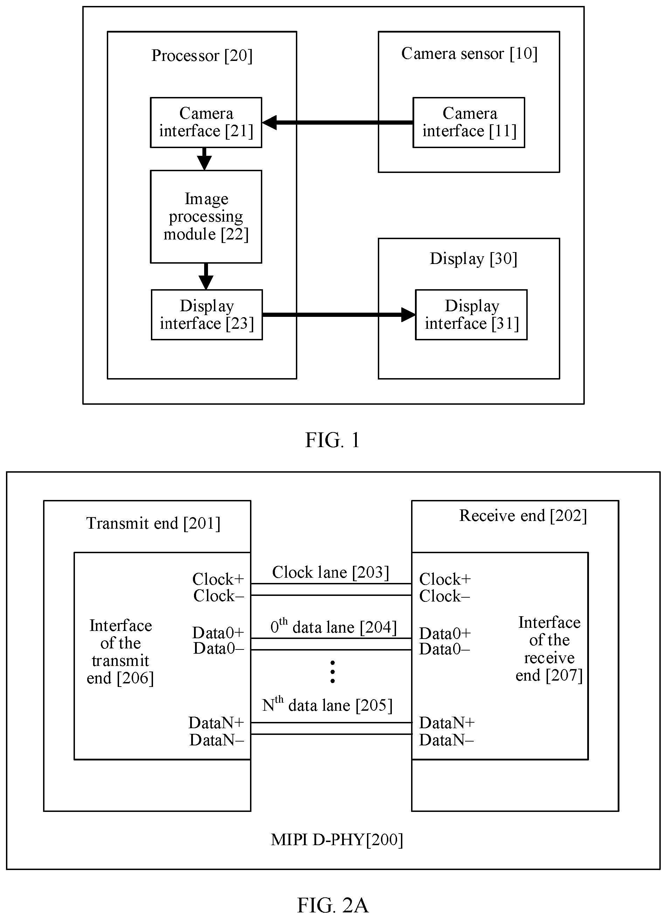

For example, FIG. 1 shows a data transmission process between a camera sensor 10, a processor 20, and a display 30. As shown in FIG. 1, a camera interface 11 of the camera sensor 10 is connected to a camera interface 21 in the processor 20. Data collected by the camera sensor 10 is transmitted to the processor 20 through the camera interface 11 and the camera interface 21. The processor 20 may further process the collected data through an image processing module 22, and then send the processed data to the display 30 through a display interface 23 and a display interface 31. The display 30 displays an image.

Data transmission between the camera interface 11 and the camera interface 21 and data transmission between the display interface 23 and the display interface 31 may be implemented by MIPI D-PHY data transmission. Specifically, the camera interfaces may be CSIs, and the display interfaces may be DSIs.

It should be understood that in some scenarios, the camera sensor is a transmit end, and the processor is a receive end. In other scenarios, the processor is a transmit end, and the display is a receive end.

FIG. 2A is a schematic illustrative diagram of an MIPI D-PHY 200 according to an embodiment of this application. The D-PHY 200 includes a clock lane 203 and one or more data lanes (for example, the $0^{th}$ data lane 204, ..., and an $N^{th}$ data lane 205 shown in FIG. 2A), where N is a positive integer not greater than 4. For example, a plurality of data lanes may be 2 to 4 data lanes. The clock lane 203 is configured to transmit a synchronization clock signal, and the data lane is configured to transmit a data signal generated through protocol packet. As shown in FIG. 2A, Clock+/Clock-is a differential analog clock signal generated by MIPI protocol packet assembly, Data0+/Data0- is a differential analog data signal generated by MIPI protocol packet assembly, and DataN+/DataN- is a differential analog data signal generated by another MIPI protocol packet assembly.

The MIPI D-PHY supports two operating modes: a high speed (High Speed, HS) and a low power (Low Power, LP). In the HS mode, differential signals are used, power consumption is high, but transmission at a high data rate (an upper limit of a current protocol is 2.5 Gbps) can be performed. In the LP mode, single-ended signals are used, a data rate is low (< 10 Mbps), but correspondingly, power consumption is also low. A combination of the two modes ensures that an MIPI bus can transmit a large amount of data at a high speed, and reduces power consumption when the MIPI bus does not need to transmit a large amount of data.

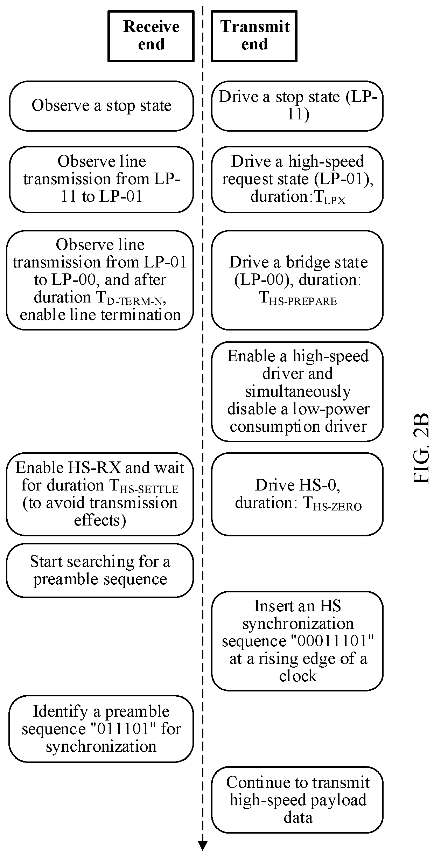

FIG. 2B is a schematic illustrative diagram of a process of MIPI D-PHY high-speed data transmission from a stop state to a start of sending transmission data. When there is no need to transmit a large amount of data, all MIPI D-PHY data lanes remain in an LP-11 state in an LP mode. This LP-11 state is also called the stop state. When high-speed valid payload data needs to be sent, the LP mode of the MIPI D-PHY data lane needs to be converted into an HS mode. The conversion process includes driving the LP-11 state to LP-01 (high-speed request state) and then to an LP-00 bridge state. In this case, a high-speed driver is enabled and a low-power consumption driver is disabled to drive HS-0. Further, a transmit end sends a specific synchronization sequence (for example, 00011101) to a receive end. The synchronization sequence is used to activate synchronous transmission of the high-speed valid payload data by the data lane. Only when the synchronization sequence received by the receive end and a preset synchronization sequence meet a condition for successful synchronization, the transmit end continues to send the high-speed valid payload data to the receive end until the transmit end drives the stop state. In this case, the data lane is switched to the LP-11 state, and the LP-11 state converts the data lane from the HS mode to the LP mode.

This is different from a condition for successful synchronization in a synchronization process of a synchronization sequence in the current technology, that is, when a synchronization sequence received by a receive end is completely consistent with a known synchronization sequence (also referred to as a preset synchronization sequence), it is determined that synchronization succeeds. In this embodiment of this application, the receive end may determine a maximum correlation peak between the received synchronization sequence and the preset synchronization sequence, and the maximum correlation peak may indicate a similarity between the received synchronization sequence and the preset synchronization sequence. When the maximum correlation peak between the received synchronization sequence and the preset synchronization sequence is not less than a determining threshold, synchronization between the receive end and the transmit end succeeds. In this case, the valid payload data may be further transmitted.

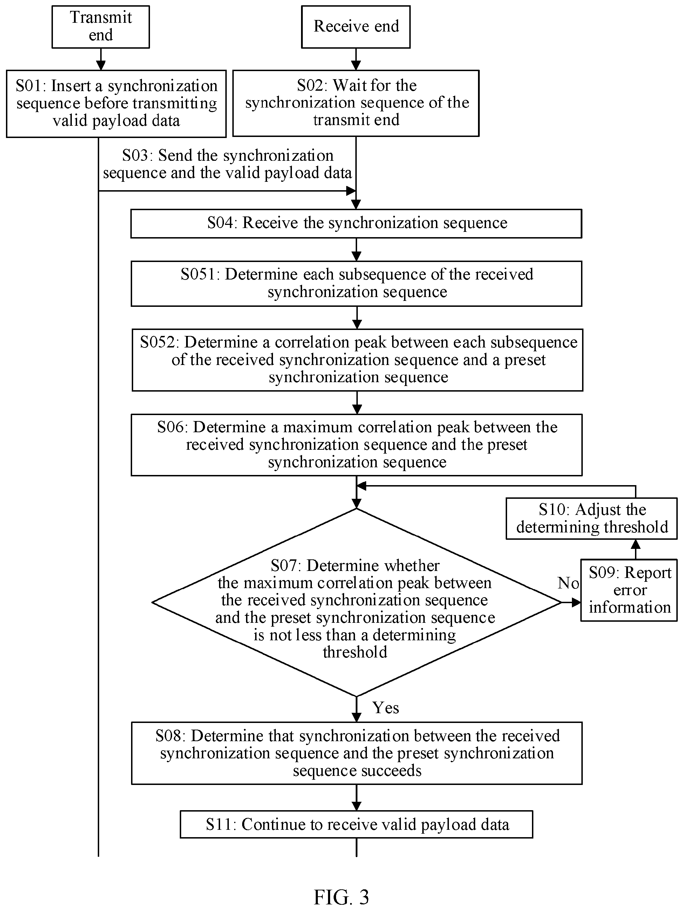

FIG. 3 is a schematic flowchart of a data synchronization method according to an embodiment. The method may be implemented by the transmit end and the receive end shown in FIG. 2A. In the scenario shown in FIG. 1, when the transmit end is a camera sensor, the receive end is a processor; or when the transmit end is a processor, the receive end is a display. As shown in FIG. 3, the method may include but is not limited to the following steps.

S01: The transmit end inserts a synchronization sequence before sending valid payload data.

S02: The receive end waits for the synchronization sequence of the transmit end.

The synchronization sequence is used for synchronization between the receive end and the transmit end, and the synchronization sequence sent by the transmit end is the same as a preset synchronization sequence of the receive end. The synchronization sequence includes one or more characters (such as 0 and 1), and may be at least one of a protocol sequence, a Barker code (Barker code) sequence, a pseudo-random (or pseudo-noise, Pseudorandom Noise, PN) code sequence, an M sequence, and a Zadoff-Chu (ZC) sequence, or may be another user-defined sequence. The protocol sequence is a common sequence in the MIPI protocol, for example, "00011101".

S03: The transmit end sends the synchronization sequence and the valid payload data to the receive end.

S04: The receive end receives the synchronization sequence from the transmit end.

In a data transmission process, data that is sent and received may be transmitted one bit at a time, and each bit is 1 or 0, or may be transmitted multiple bits at a time. For example, a D-PHY protocol sequence "00011101" is transmitted in a packet at a time.

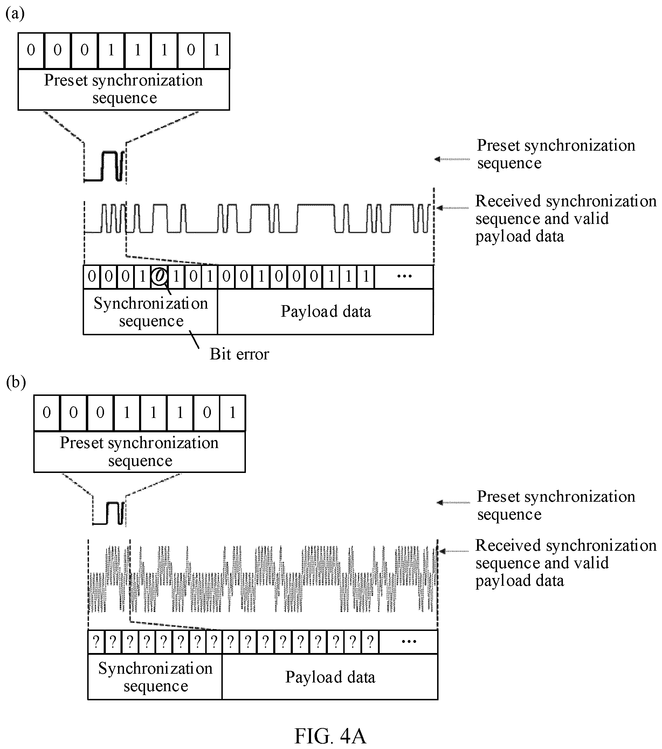

It should be understood that in a case of no noise interference, the synchronization sequence received by the receive end is the same as the preset synchronization sequence of the receive end. However, in a case of noise interference, as shown in FIG. 4A, a bit error ((a) in FIG. 4A) occurs in a transmission process of the synchronization sequence received by the receive end due to noise impact, or interference noise ((b) in FIG.

4A) is superimposed on the synchronization sequence. When the receive end converts an analog signal of the received synchronization sequence into a digital signal, the synchronization sequence superimposed with interference noise is also converted into a sequence including one or more bit errors. Therefore, under noise interference, the synchronization sequence received by the receive end may include one or more bit errors.

After the receive end performs S04, the receive end determines a maximum correlation peak between the received synchronization sequence and the preset synchronization sequence, where the maximum correlation peak indicates a similarity between the received synchronization sequence and the preset synchronization sequence.

An implementation in which the receive end determines the maximum correlation peak between the received synchronization sequence and the preset synchronization sequence may include the following steps.

S051: The receive end determines each subsequence of the received synchronization sequence.

The receive end converts the analog signal of the received synchronization sequence into the digital signal through an analog-to-digital converter (ADC), where the digital signal is represented by a character 1 or 0. The subsequence is a sequence including the first character to an $n^{th}$ character in the synchronization sequence received by the receive end, n is a positive integer not greater than P, and P is a length of the received synchronization sequence. If the length of the synchronization sequence is P, the synchronization sequence has P subsequences, and an $m^{th}$ subsequence is a sequence including first m characters received by the receive end. For example, if the synchronization sequence is 00011101, the first to eighth subsequences of the synchronization sequence are successively 0, 00, 000, 0001, 00011, 000111, 0001110 and 00011101.

It should be noted that the transmit end sequentially sends characters in the preset synchronization sequence to the receive end. In this case, the synchronization sequence received by the receive end is in a one-to-one correspondence with the characters in the preset synchronization sequence. That is, a $j^{th}$ character in the preset synchronization sequence is corresponding to a $j^{th}$ character in the received synchronization sequence, and j is a positive integer not greater than P. The "received synchronization sequence" is a total synchronization sequence received by the receive end in one payload data transmission process. Synchronization sequences received at different moments may be considered as one subsequence.

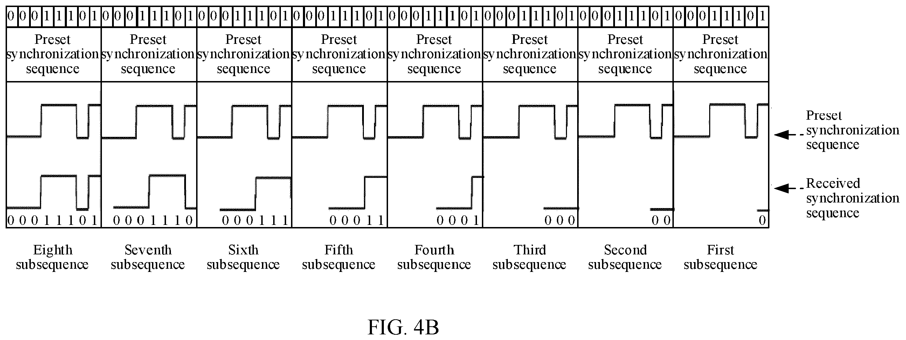

The preset synchronization sequence 00011101 is used as an example. FIG. 4B is a schematic diagram of comparison between a synchronization sequence received by a receive end at different moments and a preset synchronization sequence when there is no noise interference. In a process in which the receive end receives a synchronization sequence from the transmit end, as shown in FIG. 4B, each character in the synchronization sequence of the transmit end sequentially enters the receive end. FIG. 4B is a schematic diagram of digital signals that correspond to the first character, the second character, ..., and the eighth character in the synchronization sequence received by the receive end at different moments and the preset synchronization sequence.

S052: The receive end determines a correlation peak between each subsequence of the received synchronization sequence and the preset synchronization sequence. The correlation peak between the subsequence and the preset synchronization sequence indicates a similarity between the subsequence and the preset synchronization sequence.

In a specific implementation, the receive end determines a correlation value corresponding to each character in each subsequence of the received synchronization sequence. The correlation value indicates whether two characters are the same. A correlation value corresponding to an $i^{th}$ character in each subsequence is a correlation value between the $i^{th}$ character in each subsequence and a $(P-m+i)^{th}$ character in the preset synchronization sequence, and i is a positive integer not greater than m. The correlation value between the $i^{th}$ character in each subsequence and the $(P-m+i)^{th}$ character in the preset synchronization sequence is a product or an exclusive OR value of the $i^{th}$ character in each subsequence and the $(P-m+i)^{th}$ character in the preset synchronization sequence. Further, the receive end adds the correlation values in a correlation value set, to obtain the correlation peak between each subsequence of the received synchronization sequence and the preset synchronization sequence, where the correlation value set includes the correlation value corresponding to each character in each subsequence.

The following uses a process of calculating the correlation peak between the $m^{th}$ subsequence "$c_1 c_2 c_3 c_4 \ldots c_m$" and the preset synchronization sequence as an example to describe a method for calculating the correlation peak between each subsequence and the preset synchronization sequence. An implementation A and an implementation B of calculating the correlation peak between the $m^{th}$ subsequence and the preset synchronization sequence are provided below.

Implementation A: If a correlation value corresponding to an $i^{th}$ character in the $m^{th}$ subsequence is a product of the $i^{th}$ character and the $(P-m+i)^{th}$ character in the preset synchronization sequence, a specific process of calculating the correlation peak between the $m^{th}$ subsequence and the preset synchronization sequence is as follows.

A formula for calculating the correlation peak is as follows:

$$X(m) = \sum_{i=1}^{m} c_i c'_{P-m+i}$$

where X(m) is a correlation function, X(m) represents the correlation peak between the $m^{th}$ subsequence of the received synchronization sequence and the preset synchronization sequence, i is a character location sequence number in the sequence, P is a length of the synchronization sequence, $c_i$ is the $i^{th}$ character in the $m^{th}$ subsequence of the received synchronization sequence, $c'_{P\_m+i}$ is the $P - m + i^{th}$ character in the preset synchronization sequence, and $c_i c'_{P-m+i}$ is a product of $c_i$ and $c'_{P-m+i}$.

In some embodiments, calculation of the correlation peak between the $m^{th}$ subsequence and the preset synchronization sequence may be implemented through a circuit. The circuit includes a plurality of storage modules, a plurality of multipliers, and an adder.

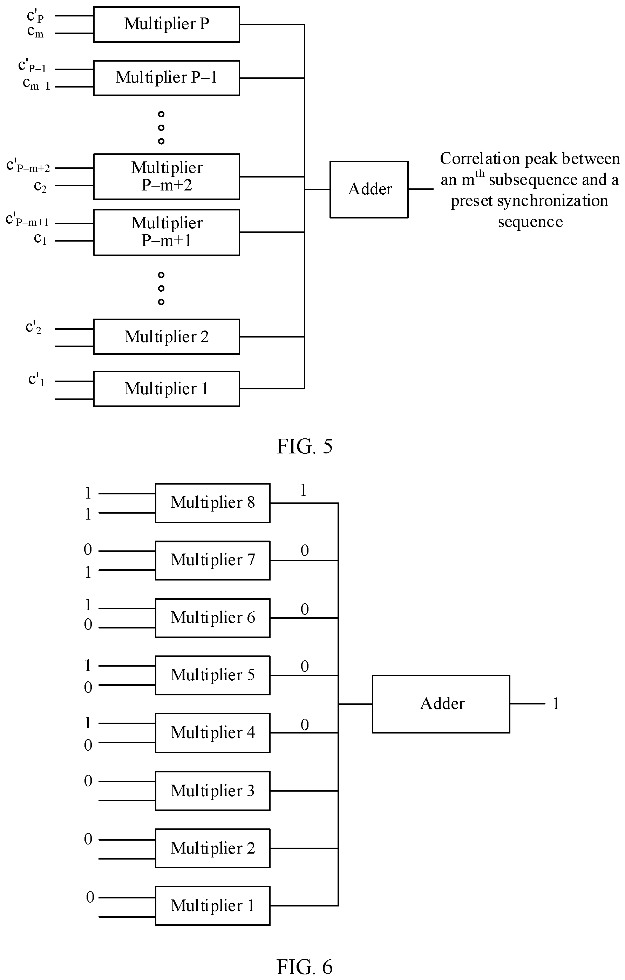

Specifically, FIG. 5 is a schematic diagram of calculating a correlation peak between an $m^{th}$ subsequence of a P-bit synchronization sequence and a preset synchronization sequence through a circuit. As shown in FIG. 5, a receive end may sequentially input a preset synchronization sequence "$c'_1 c'_2 c'_3 c'_4 \ldots c'_P$" to a first storage module. The first storage module may include P storage units. After receiving a character in a synchronization sequence, the receive end inputs the character to a second storage module. The second storage module is a shift memory, and includes P storage units. After receiving data, the second storage module shifts data of each storage unit to a next storage unit. A $P^{th}$ storage unit in the first storage module and the first storage unit in the second storage module are connected to a multiplier P, a $(P-1)^{th}$ storage unit in the first storage module and the second storage unit in the second storage module are connected to a multiplier P-1, and so on. The first storage unit in the first storage module and a $P^{th}$ storage unit in the second storage module are connected to a multiplier 1. The multiplier is configured to perform a multiplication operation on data in two storage units connected to the multiplier. The adder is connected to an output end of each multiplier, and is configured to add outputs of all multipliers. The sum is a correlation peak between a synchronization sequence received at a current moment and the preset synchronization sequence, that is, a correlation peak between a subsequence and the preset synchronization sequence. As shown in FIG. 5, the synchronization sequence received at the current moment is the $m^{th}$ subsequence, and the output end of the adder outputs the correlation peak between the $m^{th}$ subsequence and the preset synchronization sequence.

For example, FIG. 6 is a schematic illustrative diagram of calculating a correlation peak between the fifth subsequence "00011" and a preset synchronization sequence when there is no noise interference when the preset synchronization sequence is "00011101", and a synchronization sequence received by a receive end is "00011101". As shown in FIG. 6, the first to the fifth characters in the fifth subsequence are 0, 0, 0, 1, and 1. If the fourth to the eighth characters in the preset synchronization sequence are 1, 1, 1, 0, and 1 respectively, products corresponding to the first to the fifth characters in the fifth subsequence are 0, 0, 0, 0, and 1. Further, the products corresponding to the first to the fifth characters in the fifth subsequence are added to obtain that the correlation peak of the fifth subsequence is 1.

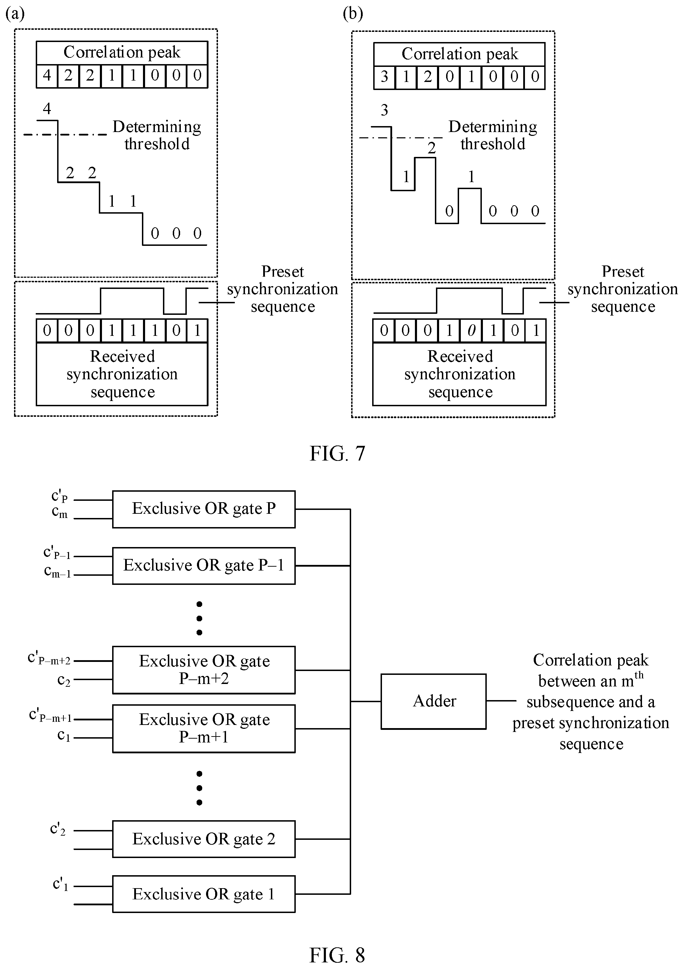

As shown in (a) in FIG. 7, when there is no noise interference, a preset synchronization sequence is "00011101", and a synchronization sequence received by a receive end is "00011101". In the foregoing implementation A, it is determined that correlation peaks between each (the first to the eighth) subsequence of the synchronization sequence received by the receive end and the preset synchronization sequence are 0, 0, 0, 1, 1, 2, 2, and 4 respectively. Still as shown in (b) in FIG. 7, when there is noise interference, when a bit error occurs due to interference to a received synchronization sequence, for example, the received synchronization sequence is "00010101" (the bit error is italicized and black), in the foregoing implementation A, correlation peaks between the first subsequence to the eighth subsequence of the synchronization sequence "00010101" received by a receive end and a preset synchronization sequence 00011101 are 0, 0, 0, 1, 0, 2, 1, and 3 respectively.

In some other embodiments, the determining a product of a $j^{th}$ character in the $m^{th}$ subsequence and a $j^{th}$ character in the preset synchronization sequence and the determining the correlation peak between the $m^{th}$ subsequence and the preset synchronization sequence may also be implemented through an upper-layer application program.

Implementation B: If a correlation value corresponding to an $i^{th}$ character in the $m^{th}$ subsequence is an exclusive OR value of the $i^{th}$ character and the $P - m + i^{th}$ character in the preset synchronization sequence, a specific process of determining the correlation peak between the $m^{th}$ subsequence and the preset synchronization sequence is as follows.

In some embodiments, in some embodiments, calculation of the correlation peak between the $m^{th}$ subsequence and the preset synchronization sequence may be implemented through a circuit. The circuit includes a plurality of storage modules, a plurality of exclusive OR gates, and an adder.

Specifically, FIG. 8 is a schematic diagram of calculating a correlation peak between an $m^{th}$ subsequence of a P-bit synchronization sequence and a preset synchronization sequence through a circuit. As shown in FIG. 8, a receive end may sequentially input a preset synchronization sequence "$c'_1 c'_2 c'_3 c'_4$ ... $c'_P$" to a first storage module. The first storage module may include P storage units. After receiving a character in a synchronization sequence, the receive end inputs the character to a second storage module. The second storage module is a shift memory, and includes P storage units. After receiving data, the second storage module shifts data of each storage unit to a next storage unit. A $P^{th}$ storage unit in the first storage module and the first storage unit in the second storage module are connected to an exclusive OR gate P, a P-1$^{th}$ storage unit in the first storage module and the second storage unit in the second storage module are connected to an exclusive OR gate P-1, and so on. The first storage unit in the first storage module and a $P^{th}$ storage unit in the second storage module are connected to an exclusive OR gate 1. The exclusive OR gate is configured to perform an exclusive OR operation on data in two storage units connected to the exclusive OR gate. The adder is connected to an output end of each multiplier, and is configured to add outputs of all exclusive OR gates. The sum is a correlation peak between a synchronization sequence received at a current moment and the preset synchronization sequence, that is, a correlation peak between a subsequence and the preset synchronization sequence. As shown in FIG. 5, the synchronization sequence received at the current moment is the $m^{th}$ subsequence, and the output end of the adder outputs the correlation peak between the $m^{th}$ subsequence and the preset synchronization sequence.

The exclusive OR gate may be one of the following two types of exclusive OR gates. A first type of exclusive OR gate is: when two characters input to the exclusive OR gate are the same, an output result of the exclusive OR gate is 1; and when two characters input to the exclusive OR gate are different, an output result of the exclusive OR gate is -1. A second type of exclusive OR gate is: when two characters input to the exclusive OR gate are the same, an output result of the exclusive OR gate is 1; and when two characters input to the exclusive OR gate are different, an output result of the exclusive OR gate is 0.

In an implementation, the exclusive OR gate in the implementation B is the first type of exclusive OR gate, and the correlation peak between the $m^{th}$ subsequence and the preset synchronization sequence is calculated in the foregoing implementation B. An example in which an exclusive OR value corresponding to the $i^{th}$ character $c_i$ in the $m^{th}$ sequence is calculated is used to describe calculation of an exclusive OR value corresponding to each character in the $m^{th}$ subsequence. The $i^{th}$ character $c_i$ in the $m^{th}$ subsequence and the $P - m + i^{th}$ character $c'_{P-m+i}$ in the preset synchronization sequence are input to the first type of exclusive OR gate. When $c_i = c'_{P-m+i}$, output an exclusive OR value 1, and when $c_i \neq c'_{P-m+i}$, output an exclusive OR value -1. Further, exclusive OR values corresponding to all characters in the $m^{th}$ subsequence are input to the adder, to obtain the correlation peak between the $m^{th}$ subsequence and the preset synchronization sequence.

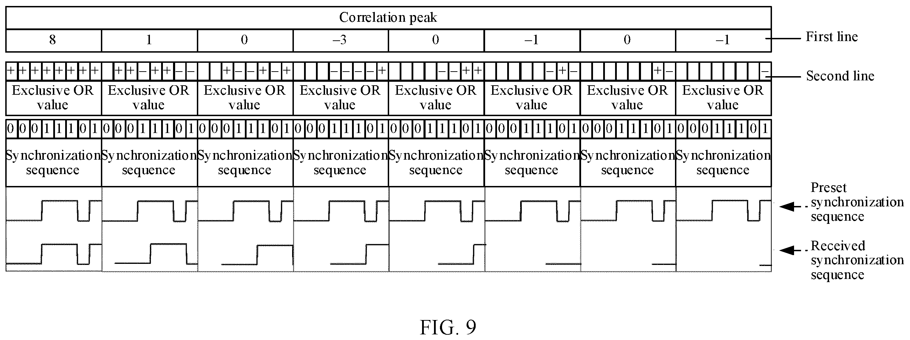

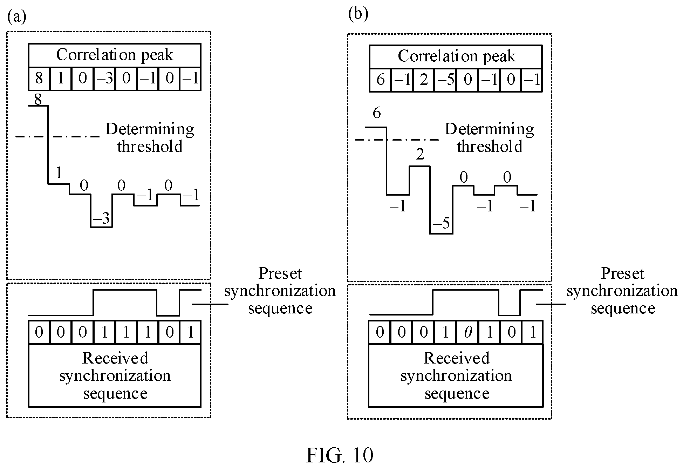

As shown in FIG. 9, when there is no noise interference, a preset synchronization sequence is "00011101", a synchronization sequence received by a receive end is "00011101", and the exclusive OR gate in the foregoing implementation B is the first type of exclusive OR gate. In the foregoing implementation B, it is determined that correlation peaks between each (the first to the eighth) subsequence of the received synchronization sequence and the preset synchronization sequence 00011101 are -1, 0, -1, 0, -3, 0, 1, and 8, as shown in the first line in FIG. 9 or (a) in FIG. 10. The second line in FIG. 9 is an exclusive OR value corresponding to each character in each subsequence of the received synchronization sequence. In FIG. 9, an exclusive OR value "+" represents "1", and an exclusive OR value "-" represents "-1". As shown in (b) in FIG. 10, when a bit error occurs in a process of transmitting a synchronization sequence by a transmit end and a receive end, for example, a received synchronization sequence is "0001*0*101" (the bit error is italicized and black), the exclusive OR gate in the foregoing implementation B is the first type of exclusive OR gate, and it is determined, in the foregoing implementation B, that correlation peaks between each (the first to the eighth) subsequence of the synchronization sequence received by the receive end and the preset synchronization sequence 00011101 are -1, 0, -1, 0, -5, 2, -1, and 6.

In another implementation, the exclusive OR gate in the implementation B is the second type of exclusive OR gate, and the correlation peak between the $m^{th}$ subsequence and the preset synchronization sequence is calculated in the foregoing implementation B. An example in which an exclusive OR value corresponding to the $i^{th}$ character $c_j$ in the $m^{th}$ sequence is calculated is used to describe calculation of an exclusive OR value corresponding to each character in the $m^{th}$ subsequence. The $i^{th}$ character $c_i$ in the $m^{th}$ subsequence and the $P - m + i^{th}$ character $c'_{P-m+i}$ in the preset synchronization sequence are input to the second type of exclusive OR gate. When $c_i = c'_{P-m+i}$, output an exclusive OR value 1, and when $c_i \neq c'_{P-m+i}$, output an exclusive OR value 0. Further, exclusive OR values corresponding to all characters in the $m^{th}$ subsequence are input to the adder, to obtain the correlation peak between the $m^{th}$ subsequence and the preset synchronization sequence.

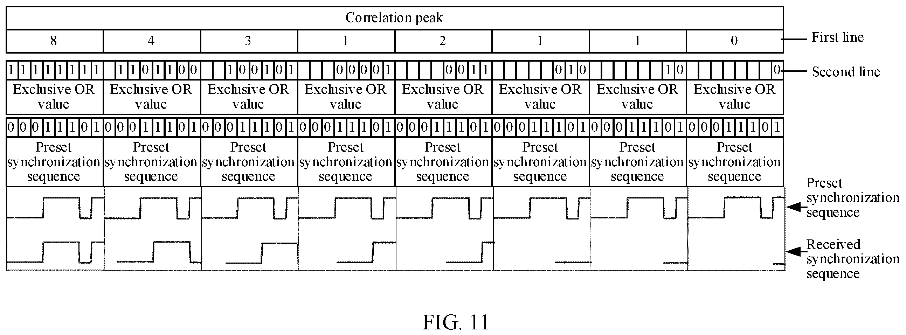

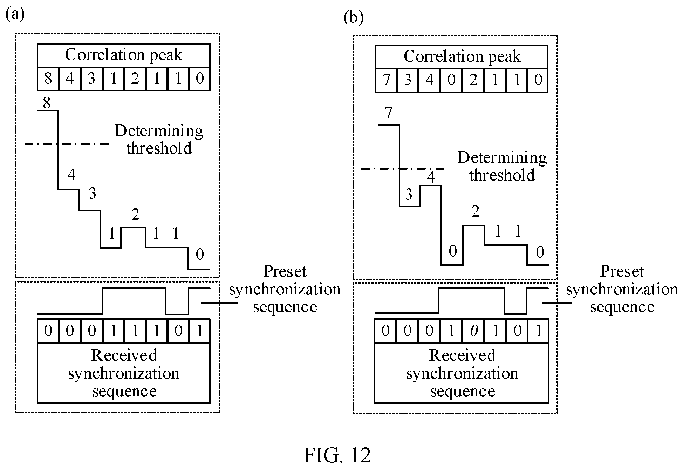

As shown in FIG. 11, when there is no noise interference, a preset synchronization sequence is "00011101", a synchronization sequence received by a receive end is "00011101", and the exclusive OR gate in the foregoing implementation B is the second type of exclusive OR gate. In the foregoing implementation B, it is determined that correlation peaks between each (the first to the eighth) subsequence of the received synchronization sequence and the preset synchronization sequence are 0, 1, 1, 2, 1, 3, 4, and 8, as shown in the first line in FIG. 11 or (a) in FIG. 12. The second line in FIG. 11 is an exclusive OR value corresponding to each character in each subsequence of the received synchronization sequence. Still as shown in (b) in FIG. 12, when a bit error occurs in a process of transmitting a synchronization sequence by a transmit end and a receive end, for example, the received synchronization sequence is "00010101", the exclusive OR gate in the foregoing implementation B is the second type of exclusive OR gate, and it is determined, in the foregoing implementation B, that correlation peaks of each (the first to the eighth) subsequence of the received synchronization sequence and the preset synchronization sequence are 0, 1, 1, 2, 0, 4, 3, and 7.

In some other embodiments, that the receive end determines the exclusive OR value of the $i^{th}$ character in the $m^{th}$ subsequence and the $P - m + i^{th}$ character in the preset synchronization sequence and determines the correlation peak between the $m^{th}$ subsequence and the preset synchronization sequence may also be implemented through an upper-layer application.

It should be understood that the receive end may further calculate the correlation peak between the $m^{th}$ subsequence and the preset synchronization sequence through another operation method.

S06: The receive end determines a maximum correlation peak between the received synchronization sequence and the preset synchronization sequence.

The receive end determines a maximum value of correlation peaks between all subsequences of the received synchronization sequence and the preset synchronization sequence as the maximum correlation peak between the received synchronization sequence and the preset synchronization sequence.

In some embodiments, the receive end may compare the correlation peaks between all obtained subsequences and the preset synchronization sequence through a comparator, to determine the maximum value of the correlation peaks as the maximum correlation peak between the received synchronization sequence and the preset synchronization sequence.

It should be understood that in some embodiments, the receive end may skip S051. After receiving the complete synchronization sequence, the receive end determines a correlation peak between the received synchronization sequence and the preset synchronization sequence as the maximum correlation peak between the received synchronization sequence and the preset synchronization sequence. In this case, the correlation peak between the synchronization sequence and the preset synchronization sequence is a sum of correlation values of all characters in the received synchronization sequence. A correlation value of a $j^{th}$ character in the received synchronization sequence is a correlation value between the $j^{th}$ character in the received synchronization sequence and a $j^{th}$ character in the preset synchronization sequence, that is, a product or an exclusive OR value of the $j^{th}$ character in the received synchronization sequence and the $j^{th}$ character in the preset synchronization sequence.

S07: The receive end determines whether the maximum correlation peak between the received synchronization sequence and the preset synchronization sequence is not less than a determining threshold.

The determining threshold is preset. The receive end may determine, through a comparator circuit or by running an upper-layer application, whether the maximum correlation peak between the received synchronization sequence and the preset synchronization sequence stored by the receive end is not less than the determining threshold.

The comparator circuit is configured to compare an input maximum correlation peak with the determining threshold, to determine whether they are equal, or determine a magnitude relationship between them.

When the maximum correlation peak between the synchronization sequence received by the receive end and the preset synchronization sequence is not less than the determining threshold, the receive end performs S08; or when the maximum correlation peak between the synchronization sequence received by the receive end and the preset synchronization sequence is less than the determining threshold, the receive end performs S09.

It should be understood that in some embodiments, after performing S052 and determining the correlation peak between the $m^{th}$ subsequence of the received synchronization sequence and the preset synchronization sequence, the receive end may directly determine whether the correlation peak between the $m^{th}$ subsequence and the preset synchronization sequence is not less than the determining threshold. When the correlation peak between the $m^{th}$ subsequence and the preset synchronization sequence is not less than the determining threshold, the receive end performs S08; or when the correlation peak between each received synchronization sequence and the preset synchronization sequence is less than the determining threshold, the receive end performs S09.

It should be understood that in some embodiments, the determining threshold corresponds to a value of a physical quantity (for example, a voltage value), and the receive end may compare the maximum correlation peak with the determining threshold in the following implementation.

In an implementation, the determining threshold is represented by a voltage value $U_p$. The receive end inputs the maximum correlation peak between the received synchronization sequence and the preset synchronization sequence to a digital-to-analog converter. In this way, the maximum correlation peak corresponds to a voltage value $U_m$. There is a determined correspondence between a voltage value and a dimensionless number, and the correspondence may be a correspondence shown in Table 1. $U_m$ and $U_p$ are input to the comparator. When $U_m \geq U_p$, it is determined that synchronization of the received synchronization sequence and the preset synchronization sequence succeeds, that is, synchronization between the transmit end and the receive end succeeds.

**Table 1**

| Number | Voltage |
|--------|---------|
| 0 | 0 mV |
| 1 | 50 mV |

(continued)

| Number | Voltage |
|--------|---------|
| 2 | 100 mV |
| 3 | 150 mV |

In another implementation, the determining threshold is represented by the voltage value $U_p$. The receive end separately inputs the correlation peak between each subsequence of the received synchronization sequence and the preset synchronization sequence to the digital-to-analog converter, and obtains a voltage value corresponding to the correlation peak between each subsequence and the preset synchronization sequence. The receive end compares the voltage value corresponding to the correlation peak between each subsequence and the preset synchronization sequence with the voltage value $U_p$ corresponding to the determining threshold. The maximum value of the correlation peaks between subsequences of the received synchronization sequence and the preset synchronization sequence corresponds to a voltage value $U_m$. When $U_m \geq U_p$, it is determined that synchronization of the received synchronization sequence and the preset synchronization sequence succeeds, that is, synchronization between the transmit end and the receive end succeeds.

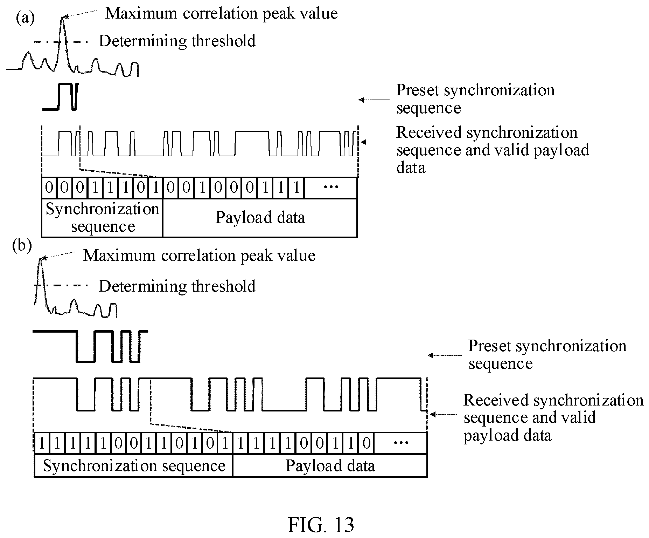

For example, as shown in (a) in FIG. 13, a correlation peak between each subsequence of a received synchronization sequence "00011101" and a preset synchronization sequence "00011101" corresponds to a different voltage value, and a maximum correlation peak represented by a voltage value in (a) in FIG. 13 is greater than a determining threshold represented by a voltage value. As shown in (b) in FIG. 13, a Barker code sequence "1111100110101" whose length is 13 is used as an example. A correlation peak between each subsequence of a received synchronization sequence 1111100110101 and a preset synchronization sequence "1111100110101" corresponds to a different voltage value, and a maximum correlation peak represented by a voltage value in (b) in FIG. 13 is greater than a determining threshold represented by a voltage value.

Optionally, the determining threshold and the correlation peak may be alternatively represented by a current, energy, a normalization ratio, and another physical quantity. This is not limited in this embodiment of this application.

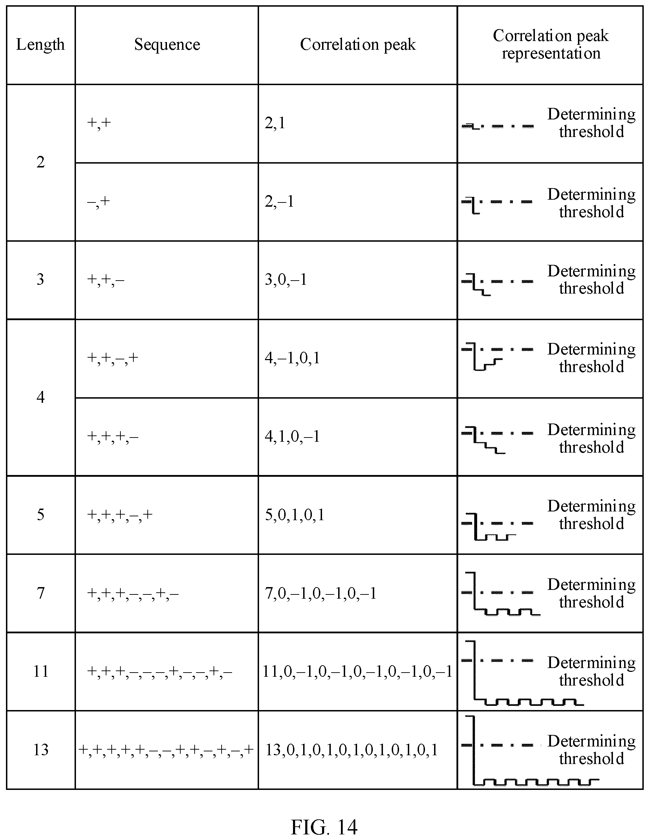

It should be noted that an initial value of the determining threshold is a value between a maximum value and a second maximum value of correlation peaks between all subsequences of the preset synchronization sequence and the preset synchronization sequence. As shown in FIG. 14, FIG. 14 shows a correlation peak between each subsequence of a preset synchronization sequence and a preset synchronization sequence and an initial determining threshold when the preset synchronization sequence is Barker code of various different lengths.

For example, a preset synchronization sequence "00011101" is used as an example to describe setting of an initial value of a determining threshold. As shown in (a) in FIG. 7, a maximum correlation peak b between each subsequence of the preset synchronization sequence and the preset synchronization sequence is 4 and a second maximum correlation peak a is 2. Therefore, the initial value of the determining threshold may be set to a value of [2,4]. As shown in (a) in FIG. 10, a maximum correlation peak b between each subsequence of the preset synchronization sequence and the preset synchronization sequence is 8 and a second maximum correlation peak a is 1. Therefore, the initial value of the determining threshold may be set to a value between [1,8]. In some embodiments, when a "0" voltage reference level may change, a range of the determining threshold may alternatively be set to a range of absolute values of correlation peaks. For example, as shown in (a) in FIG. 10, if a maximum value of an absolute value of a correlation peak between each subsequence of the preset synchronization sequence and the preset synchronization sequence is 8, and a second maximum value is 3, the initial value of the determining threshold may be set to a value between [3,8]. As shown in (a) in FIG. 12, a maximum correlation peak b between each subsequence of the preset synchronization sequence and the preset synchronization sequence is 8, and a second maximum correlation peak a is 4. Therefore, the initial value of the determining threshold may be set to a value between [4,8].

S08: The receive end determines that the synchronization between the received synchronization sequence and the preset synchronization sequence succeeds, and the receive end may perform S11.

S09: The receive end determines that the synchronization between the received synchronization sequence and the preset synchronization sequence fails, and reports error information.

When determining that there are the maximum value and the second maximum value of correlation peaks between the received synchronization sequence and the preset synchronization sequence, the receive end reports error information, where the error information includes the maximum correlation peak b and the second maximum correlation peak a between the received synchronization sequence and the preset synchronization sequence. When determining that there is no the maximum value and the second maximum value of correlation peaks between the received synchronization sequence and the preset synchronization sequence, the receive end determines that the synchronization between the received synchronization sequence and the preset synchronization sequence fails.

In some embodiments, to increase a probability of successful synchronization, after S09, the determining threshold may be reduced, so that the synchronization of the received synchronization sequence and the preset synchronization sequence succeeds. Specifically, the method may further include the following step S10.

S10: The receive end adjusts the determining threshold.

The receive end adjusts the determining threshold based on the error information until an adjusted determining threshold is not greater than the maximum correlation peak between the received synchronization sequence and the preset synchronization sequence or the adjusted determining threshold is not within a threshold range. An upper limit of the threshold range is the maximum correlation peak b between the received synchronization sequence and the preset synchronization sequence, and a lower limit of the threshold range is the second maximum value a of the correlation peaks between all subsequences of the received synchronization sequence and the preset synchronization sequence.

The preset synchronization sequence "00011101" is used as an example to describe a threshold range of the determining threshold. As shown in (b) in FIG. 7, the maximum correlation peak b between the synchronization sequence received by the receive end and the preset synchronization sequence is 3, and the second maximum correlation peak a is 2. Therefore, the range of the determining threshold is [2,3]. As shown in (b) in FIG. 10, the maximum correlation peak b between the synchronization sequence received by the receive end and the preset synchronization sequence is 6, and the second maximum correlation peak a is 2. Therefore, the range of the determining threshold is [2,6]. In some embodiments, when the "0" voltage reference level may change, the range of the determining threshold may alternatively be set to a range of absolute values of correlation peaks. For example, as shown in (b) in FIG. 10. If a maximum value of an absolute value of a correlation peak between the synchronization sequence received by the receive end and the preset synchronization sequence is 6, and a second maximum value is 5, the range of the determining threshold is [5,6]. As shown in (b) in FIG. 12, the maximum correlation peak b between the synchronization sequence received by the receive end and the preset synchronization sequence is 7, and the second maximum correlation peak a is 4. Therefore, the range of the determining threshold is [4,7].

The receive end may adjust the determining threshold in the following manner.

Manner 1: The receive end may adjust the determining threshold by sequentially decreasing by a first interval. Specifically, the initial value of the determining threshold is sequentially decreased by the first interval, until the determining threshold is decreased to a value within a threshold range [a, b].

Manner 2: The receive end may adjust the determining threshold in an adaptive manner. Specifically, the initial value of the determining threshold is adjusted to an average value $d = (b + a) / 2$ of the maximum correlation peak b and the second maximum correlation peak a between the received synchronization sequence and the preset synchronization sequence. When the adjusted determining threshold d differs greatly from the maximum correlation peak b, the determining threshold d may be adjusted to be an average value e = (b + d) / 2 of the maximum correlation peak b and d. In this manner, the determining threshold is determined as a value that is of a small difference from the maximum correlation peak b.

Manner 3: The receive end directly adjusts the initial value of the determining threshold to a value within [a, b], for example, the maximum correlation peak b, the second maximum correlation peak a, or the average value d = (b + a) / 2 of the maximum correlation peak b and the second maximum correlation peak a of the received synchronization sequence and the preset synchronization sequence.

In some embodiments, when the receive end directly calculates the correlation peak between the received synchronization sequence and the preset synchronization sequence as the maximum correlation peak b of the received synchronization sequence and the preset synchronization sequence, the receive end does not determine the second maximum correlation peak. In this case, the receive end may adjust the determining threshold in the manner 1 or the manner 2 until the determining threshold is adjusted to be not less than the maximum correlation peak b.

It should be understood that after the receive end adjusts the determining threshold, the receive end performs S07. In this case, if the maximum correlation peak between the received synchronization sequence and the preset synchronization sequence is not less than the determining threshold, the receive end continues to perform S08.

In some embodiments, the determining threshold may alternatively be a fixed value, for example, a value determined based on the method for determining the initial value of the determining threshold in S07, and the receive end may skip S10.

S11: The receive end continues to receive, through a high-speed data lane, valid payload data corresponding to the synchronization sequence.

The valid payload data corresponding to the synchronization sequence is a payload sequence connected after the synchronization sequence.

By applying the data synchronization method shown in FIG. 3, when the maximum correlation peak between the received synchronization sequence and the preset synchronization sequence is not less than the determining threshold, it may be determined that the synchronization between the receive end and the transmit end succeeds. When the maximum correlation peak between the received synchronization sequence and the preset synchronization sequence is less than the determining threshold, the receive end reports the error information, and adjusts the determining threshold to be not greater than the maximum correlation peak based on the error information. In this way, when the maximum correlation peak between the received synchronization sequence and the preset synchronization sequence is compared with the adjusted determining threshold, the maximum correlation peak is less than or equal to the adjusted determining threshold, and synchronization between the receive end and the transmit end succeeds. Therefore, with the data synchronization method shown in FIG. 3, a probability of successful synchronization between the receive end and the transmit end can be increased, and valid payload data can be transmitted at a high speed between the receive end and the transmit end.

In some embodiments, the synchronization sequence may include a plurality of groups of sequences, and "a plurality of groups" means two or more groups. The synchronization sequence may include a plurality of groups of sequences of a same type or different types, and "a plurality of groups" means two or more groups. A plurality of groups of sequences of a same type are, for example, a combination of a sequence 1 "00011101", a sequence 2 "00011101", and a sequence 3 "00011101". A plurality of groups of sequences of different types are, for example, a combination of a sequence 1 "00011101" and a sequence 2 (a Barker code sequence " 1111100110101 "). The plurality of groups of sequences included in the synchronization sequence received by the receive end are denoted as a plurality of groups of first sequences, and the plurality of groups of sequences included in the preset synchronization sequence are denoted as a plurality of groups of second sequences. A $k^{th}$ group of first sequences in the received synchronization sequence corresponds to a $k^{th}$ group of second sequences in the preset synchronization sequence, and k is a positive integer not greater than a total quantity of groups in the received synchronization sequence. A maximum correlation peak corresponding to the $k^{th}$ group of first sequences is a maximum correlation peak between the $k^{th}$ group of first sequences and the $k^{th}$ group of second sequences. When a maximum correlation peak corresponding to each of Q groups of first sequences in the plurality of groups of first sequences is not less than the determining threshold, it is determined that the synchronization between the receive end and the transmit end succeeds, where Q is a positive integer not greater than the total quantity of groups in the received synchronization sequence.

A process of synchronizing the $k^{th}$ group of first sequences and the corresponding $k^{th}$ group of second sequences in the preset synchronization sequence is used as an example to describe a process (a-g) of synchronizing each group of first sequences of the received synchronization sequence and second sequences corresponding to the group of first sequences.

    a. The receive end determines each subsequence of the received $k^{th}$ group of first sequences.

    b. The receive end determines a correlation peak between each subsequence of the received $k^{th}$

group of first sequences and the $k^{th}$ group of second sequences.

c. The receive end determines a maximum correlation peak between the $k^{th}$ group of first sequences and the $k^{th}$ group of second sequences.

For specific processes of a, b, and c, refer to related descriptions of S051, S052, S06, and S07 in FIG. 3. Details are not described herein again.

d. The receive end determines whether the maximum correlation peak between the $k^{th}$ group of first sequences and the $k^{th}$ group of second sequences is not less than the determining threshold.

In an implementation, the synchronization sequence includes a plurality of groups of sequences of a same type, and an initial determining threshold may be set. For a setting manner, refer to related descriptions of S08. The receive end determines whether the maximum correlation peak between the $k^{th}$ group of first sequences and the $k^{th}$ group of second sequences is not less than the initial determining threshold. When the maximum correlation peak between the $k^{th}$ group of first sequences and the $k^{th}$ group of second sequences is not less than the initial determining threshold, the receive end determines that synchronization of the $k^{th}$ group of first sequences and the $k^{th}$ group of second sequences succeeds, and performs a process of synchronizing a $(k+1)^{th}$ group of first sequences and a $(k+1)^{th}$ group of second sequences. When the maximum correlation peak between the $k^{th}$ group of first sequences and the $k^{th}$ group of second sequences is less than the initial determining threshold, the receive end reports error information, and then adjusts the initial determining threshold. It should be understood that determining thresholds corresponding to the groups of first sequences may be different, and a determining threshold corresponding to the $k^{th}$ group of first sequences is determined by the $k^{th}$ group of first sequences and the $k^{th}$ group of second sequences. For this process, refer to related descriptions of S09 to S10.

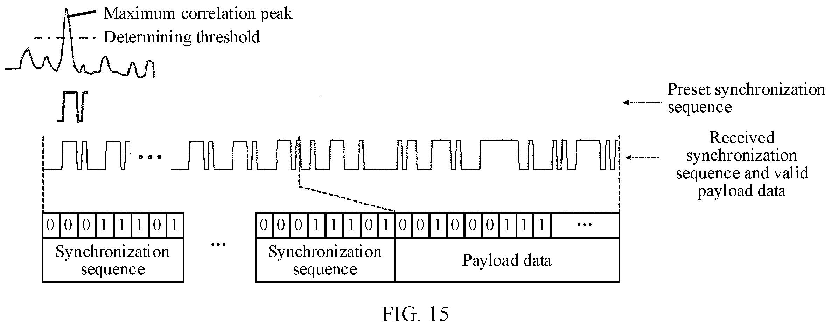

As shown in FIG. 15, FIG. 15 is a schematic diagram in which when a synchronization sequence includes a plurality of groups of sequences "00011101", a determining threshold and a maximum correlation peak between a $k^{th}$ group of first sequences and a $k^{th}$ group of second sequences respectively correspond to different voltage values.

In another implementation, the synchronization sequence includes a plurality of groups of sequences of different types, and an initial determining threshold may be set for each group of first sequences. For a setting manner, refer to related descriptions of S07. When the receive end receives the $k^{th}$ group of first sequences, the receive end updates the determining threshold to an initial determining threshold corresponding to the $k^{th}$ group of first sequences. Further, the receive end determines whether the maximum correlation peak between the $k^{th}$ group of first sequences and the $k^{th}$ group of second sequences is not less than the initial determining threshold corresponding to the $k^{th}$ group of first sequences. When the maximum correlation peak between the $k^{th}$ group of first sequences and the $k^{th}$ group of second sequences is not less than the initial determining threshold corresponding to the $k^{th}$ group of first sequences, the receive end determines that synchronization of the $k^{th}$ group of first sequences and the $k^{th}$ group of second sequences succeeds, and performs a process of synchronizing a $(k+1)^{th}$ group of first sequences and a $(k+1)^{th}$ group of second sequences. When the maximum correlation peak between the $k^{th}$ group of first sequences and the $k^{th}$ group of second sequences is less than the initial determining threshold corresponding to the $k^{th}$ group of first sequences, the receive end reports error information, and then adjusts the initial determining threshold corresponding to the $k^{th}$ group of first sequences. The determining threshold corresponding to the $k^{th}$ group of first sequences is determined by the $k^{th}$ group of first sequences and the $k^{th}$ group of second sequences. For this process, refer to related descriptions of S09 to S10.

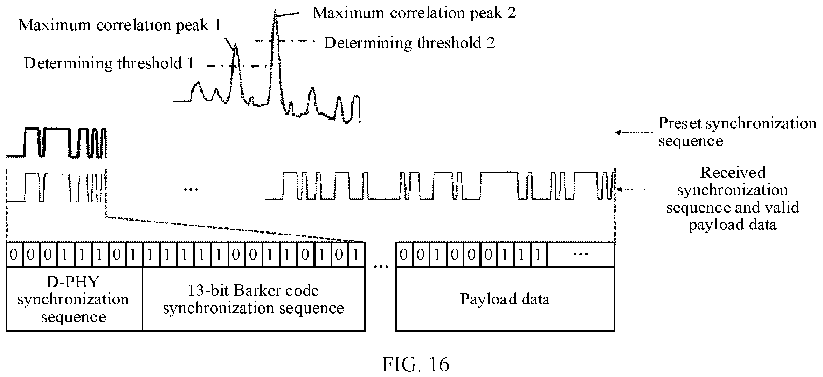

As shown in FIG. 16, FIG. 16 is a schematic diagram in which when a synchronization sequence includes a group of sequences "00011101" and a group of Barker code "1111100110101" whose length is 13, voltages values are used to represent a determining threshold 1 corresponding to a first group of first sequences "00011101", a maximum correlation peak 1 between the first group of first sequences and a first group of second sequences, and a determining threshold 2 corresponding to a second group of first sequences " 1111100110101", and a maximum correlation peak 2 between the second group of first sequences and a second group of second sequences.

e. When the maximum correlation peak corresponding to each of Q groups of first sequences in the plurality of groups of first sequences is not less than the determining threshold (the initial value or a value after each adjustment), it is determined that the synchronization between the receive end and the transmit end succeeds, where Q is a positive integer not greater than the total quantity of groups in the received synchronization sequence.

f. The receive end continues to receive, through the high-speed data lane, the valid payload data corresponding to the synchronization sequence.

When the synchronization sequence includes a plurality of groups of sequences, a maximum correlation peak corresponding to each group of first sequences is compared with a determining threshold corresponding to the group of first sequences. When maximum correlation peaks corresponding to some first sequences are less than determining thresholds corresponding to the first sequences, it may be determined that the synchronization between the receive end and the transmit end succeeds provided that a maximum correlation peak corresponding to each of Q groups of first sequences in the plurality of groups of first sequences is not less than the determining threshold (the initial value or the value after each adjustment). In this way, the probability of successful synchronization between the receive end and the transmit end is further increased. For example, when Q=1, provided that a maximum correlation peak corresponding to one group of first sequences is not less than the determining threshold, it may be determined that the synchronization between the receive end and the transmit end succeeds.

It should be noted that the data synchronization method described in FIG. 3 may also be applied to other single-ended or differential signal transmission manners (such as MIPI C-PHY, MIPI M-PHY, MIPI-APHY, LVDS, USB, eDP, SerDes and LPDP).

An example electronic device 100 provided in an embodiment of this application is described below.

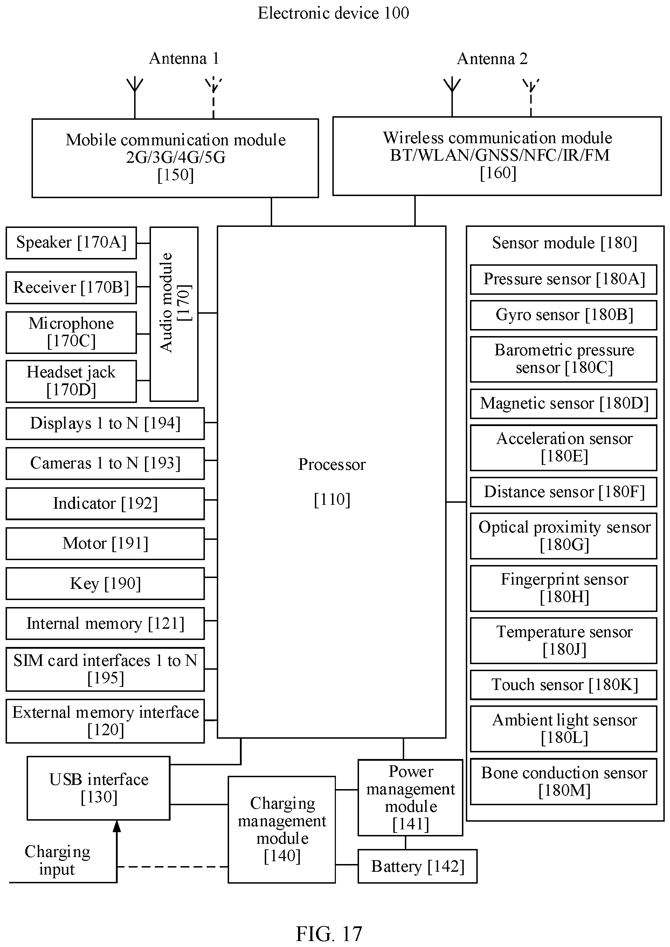

FIG. 17 is a schematic diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, etc.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate components, or may be integrated into one or more processors.

The controller may be a nerve center and a command center of the electronic device 100. The controller may generate an operation control signal based on an instruction operation code and a timing signal, and implement control on instruction fetching and instruction execution.

A memory configured to store instructions and data may be further disposed in the processor 110. In some embodiments, the memory in the processor 110 is a cache memory. The memory may store instructions or data recently used or to be cyclically used by the processor 110. When needing to use the instructions or the data again, the processor 110 may directly call the instructions or the data from the memory. This avoids repeated accessing and reduces a wait time for the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100. In some scenarios of embodiments of this application, the transmit end may be the camera 193, the receive end may be the processor 110, and the transmit end communicates with the receive end through the CSI interface. In a communication process, the data synchronization method shown in FIG. 3 may be applied. For details, refer to related descriptions of the embodiment shown in FIG. 3. In some other scenarios of the embodiments of this application, the transmit end may be the processor 110, the receive end may be the display 194, and the transmit end communicates with the receive end through the DSI interface. In a communication process, the data synchronization method shown in FIG. 3 may also be applied. For details, refer to related descriptions of the embodiment shown in FIG. 3.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device. In some embodiments of this application, when the electronic device 100 communicates with another device through the USB interface 130, the electronic device 100 is the transmit end, and the another electronic device is the receive end, and the data synchronization method shown in FIG. 3 may be applied. For details, refer to related descriptions of the embodiment shown in FIG. 3.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive charging input of a wired charger through the USB interface 130. In some embodiments of wireless charging, the charging management module 140 may receive wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor a parameter, for example, a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may also be reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be a separate component. In some other embodiments, the modem processor may be independent of the processor 110, and is disposed in a same device as the mobile communication module 150 or another functional module.

The wireless communication module 160 may provide a solution applied to the electronic device 100 for a wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs frequency modulation and filtering on the electromagnetic wave signal, and sends the processed signal to the processor 110. The wireless communication module 160 may further receive a to-be-sent signal from the processor 110, and perform frequency modulation and amplification on the signal. The amplified signal is converted into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or a phone book) created during use of the electronic device 100, and the like. In addition, the internal memory 121 may include a high-speed random access memory, or may include a nonvolatile memory, such as at least one disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, x, y, and z axes) may be determined through the gyro sensor 180B.

The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip leather case through the magnetic sensor 180D. In some embodiments, when the electronic device 100 is a clamshell phone, the electronic device 100 may detect opening and closing of a flip cover based on the magnetic sensor 180D. Further, a feature such as automatically unlocking when flipping is set based on a detected opening or closing state of the leather case or a detected opening or closing state of the flip cover.

The acceleration sensor 180E may detect accelerations in various directions (generally in three axes) of the electronic device 100. When the electronic device 100 is still, a magnitude and a direction of gravity may be detected. The acceleration sensor 180E may be further configured to identify a posture of the electronic device, and is used in applications including switching between a landscape mode and a portrait mode and a pedometer application.

The distance sensor 180F is configured to measure a distance. The electronic device 100 may measure the distance in an infrared manner or in a laser manner. In some embodiments, in a photographing scenario, the electronic device 100 may measure a distance through the distance sensor 180F to implement quick focusing.

The optical proximity sensor 180G may include, for example, a light-emitting diode (LED), and a photodetector, for example, a photodiode. The light emitting diode may be an infrared light emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that a user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may further be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a touch panel. The touch sensor 180K may be disposed on the display 194, and a touchscreen, also referred to as a "touch screen", is formed by the touch sensor 180K and the display 194. The touch sensor 180K is configured to detect a touch operation performed on or near the touch sensor. The touch sensor may transfer the detected touch operation to the application processor to determine a touch event type. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibrating bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The key 190 includes a power key, a volume key, and the like. The key 190 may be a mechanical key, or may be a touch key. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photo taking and audio playing) may correspond to different vibration feedback effects. The motor 191 may also provide different vibration feedback effects corresponding to touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

According to the context, the term "when" used in the foregoing embodiments may be interpreted as "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

**Claims**

1. A data synchronization method, applied to a receive end, wherein the method comprises:

   receiving (S04) a synchronization sequence from a transmit end, wherein the synchronization sequence is used for synchronization between the receive end and the transmit end; determining (S06) a maximum correlation peak between the received synchronization sequence and a preset synchronization sequence (11), wherein the preset synchronization sequence (11) is the same as the synchronization sequence sent by the transmit end, and the maximum correlation peak indicates a similarity between the received synchronization sequence and the preset synchronization sequence (11), comprising:

   determining (S052) a correlation peak between each subsequence of the received synchronization sequence and the preset synchronization sequence (11), wherein the subsequence is a sequence formed by first $n$ characters in the received synchronization sequence, $n$ is a positive integer not greater than P, P is a length of the received synchronization sequence, and the correlation peak between the subsequence and the preset synchronization sequence (11) indicates a similarity between the subsequence and the preset synchronization sequence (11); and
   determining a maximum value of correlation peaks between all subsequences of the received synchronization sequence and the preset synchronization sequence (11) as the maximum correlation peak between the received synchronization sequence and the preset synchronization sequence (11);

   determining (S08), when the maximum correlation peak between the received synchronization sequence and the preset synchronization sequence (11) is not less than a determining threshold, that the synchronization between the receive end and the transmit end succeeds; and
   receiving (S11) valid payload data corresponding to the synchronization sequence from the transmit end.

2. The method according to claim 1, wherein the determining a correlation peak between each subsequence of the received synchronization sequence and the preset synchronization sequence (11) comprises:

   determining a correlation value corresponding to each character in each subsequence of the received synchronization sequence, wherein the correlation value indicates whether two characters are the same, a correlation value corresponding to an $i^{th}$ character in an $m^{th}$ subsequence is a correlation value between the $i^{th}$ character in the $m^{th}$ subsequence and a $(P-m+i)^{th}$ character in the preset synchronization sequence (11), and $i$ is a positive integer not greater than $m$; and

adding correlation values in a correlation value set, to obtain the correlation peak between each subsequence and the preset synchronization sequence (11), wherein the correlation value set comprises the correlation value corresponding to each character in each subsequence.

3. The method according to claim 2, wherein a correlation value between an $i^{th}$ character in each subsequence and the $(P-m+i)^{th}$ character in the preset synchronization sequence (11) is a product or an exclusive OR value of the $i^{th}$ character in each subsequence and the $(P-m+i)^{th}$ character in the preset synchronization sequence (11).

4. The method according to any one of claims 1 to 3, wherein the method further comprises: when the maximum correlation peak between the received synchronization sequence and the preset synchronization sequence (11) is less than the determining threshold, adjusting the determining threshold until an adjusted determining threshold is not greater than the maximum correlation peak or the adjusted determining threshold is not within a threshold range, wherein an upper limit of the threshold range is the maximum correlation peak, and a lower limit of the threshold range is a second maximum value of the correlation peaks between all the subsequences of the received synchronization sequence and the preset synchronization sequence (11).

5. The method according to claim 4, wherein an initial value of the determining threshold is a value between the maximum value and the second maximum value of the correlation peaks between all the subsequences of the preset synchronization sequence (11) and the preset synchronization sequence (11).

6. The method according to any one of claims 1 to 5, wherein the synchronization sequence is at least one of a protocol sequence, a Barker code sequence, a pseudo-random code sequence, an M sequence, and a ZC sequence.

7. An electronic device (100), comprising one or more processors (20, 110), one or more memories, and one or more data transmission interfaces, wherein the one or more data transmission interfaces and the one or more memories are separately coupled to the one or more processors (20, 110);

the one or more data transmission interfaces are configured to transmit data between a receive end and a transmit end;
the one or more memories are configured to store computer program code, wherein the computer program code comprises computer instructions; and
the processor (20, 110) is configured to invoke the computer instructions to perform the following operations:

receiving, through the data transmission interface, a synchronization sequence from the transmit end, wherein the synchronization sequence is used for synchronization between the receive end and the transmit end;
determining a maximum correlation peak between the received synchronization sequence and a preset synchronization sequence (11), wherein the preset synchronization sequence (11) is the same as the synchronization sequence sent by the transmit end, and the maximum correlation peak indicates a similarity between the received synchronization sequence and the preset synchronization sequence (11), comprising:

determining a correlation peak between each subsequence of the received synchronization sequence and the preset synchronization sequence (11), wherein the subsequence is a sequence formed by first n characters in the received synchronization sequence, n is a positive integer not greater than P, P is a length of the received synchronization sequence, and the correlation peak between the subsequence and the preset synchronization sequence (11) indicates a similarity between the subsequence and the preset synchronization sequence (11); and
determining a maximum value of correlation peaks between all subsequences of the received synchronization sequence and the preset synchronization sequence (11) as the maximum correlation peak between the received synchronization sequence and the preset synchronization sequence (11);

determining, when the maximum correlation peak between the received synchronization sequence and the preset synchronization sequence (11) is not less than a determining threshold, that the synchronization between the receive end and the transmit end succeeds; and
receiving, through the data transmission interface, valid payload data corresponding to the synchronization sequence from the transmit end.

8. The electronic device (100) according to claim 7, wherein the determining, by the processor (20, 110), a correlation peak between each subsequence of the received synchronization sequence and the preset synchronization sequence (11) comprises:

    determining a correlation value corresponding to each character in each subsequence of the received synchronization sequence, wherein the correlation value indicates whether two characters are the same, a correlation value corresponding to an $i^{th}$ character in an $m^{th}$ subsequence is a correlation value between the $i^{th}$ character in the $m^{th}$ subsequence and a $(P-m+i)^{th}$ character in the preset synchronization sequence (11), and i is a positive integer not greater than m; and
    adding correlation values in a correlation value set, to obtain the correlation peak between each subsequence and the preset synchronization sequence (11), wherein the correlation value set comprises the correlation value corresponding to each character in each subsequence.

9. The electronic device (100) according to claim 8, wherein a correlation value between an $i^{th}$ character in each subsequence and the $(P-m+i)^{th}$ character in the preset synchronization sequence (11) is a product or an exclusive OR value of the $i^{th}$ character in each subsequence and the $(P-m+i)^{th}$ character in the preset synchronization sequence (11).

10. The electronic device (100) according to any one of claims 7 to 9, wherein the processor (20, 110) is further configured to:
when the maximum correlation peak between the received synchronization sequence and the preset synchronization sequence (11) is less than the determining threshold, adjust the determining threshold until an adjusted determining threshold is not greater than the maximum correlation peak or the adjusted determining threshold is not within a threshold range, wherein an upper limit of the threshold range is the maximum correlation peak, and a lower limit of the threshold range is a second maximum value of the correlation peaks between all the subsequences of the received synchronization sequence and the preset synchronization sequence (11).

11. The electronic device (100) according to any one of claims 7 to 10, wherein the synchronization sequence is at least one of a protocol sequence, a Barker code sequence, a pseudo-random code sequence, an M sequence, and a ZC sequence.

12. A computer storage medium, comprising computer instructions, wherein when the computer instructions are run on an electronic device (100), the electronic device (100) is enabled to perform the data synchronization method according to any one of claims 1 to 6.

**Patentansprüche**

1. Datensynchronisationsverfahren, das auf ein Empfangsende angewandt wird, wobei das Verfahren Folgendes umfasst:

    Empfangen (S04) einer Synchronisationssequenz von einem Übertragungsende, wobei die Synchronisationssequenz zur Synchronisation zwischen dem Empfangsende und dem Übertragungsende verwendet wird;
    Bestimmen (S06) einer maximalen Korrelationsspitze zwischen der empfangenen Synchronisationssequenz und einer voreingestellten Synchronisationssequenz (11), wobei die voreingestellte Synchronisationssequenz (11) die gleiche wie die Synchronisationssequenz ist, die durch das Übertragungsende gesendet wird, und die maximale Korrelationsspitze eine Ähnlichkeit zwischen der empfangenen Synchronisationssequenz und der voreingestellten Synchronisationssequenz (11) angibt, umfassend:

        Bestimmen (S052) einer Korrelationsspitze zwischen jeder Teilsequenz der empfangenen Synchronisationssequenz und der voreingestellten Synchronisationssequenz (11), wobei die Teilsequenz eine Sequenz ist, die durch erste n Zeichen in der empfangenen Synchronisationssequenz gebildet wird, n eine positive Ganzzahl nicht größer als P ist, P eine Länge der empfangenen Synchronisationssequenz ist und die Korrelationsspitze zwischen der Teilsequenz und der voreingestellten Synchronisationssequenz (11) eine Ähnlichkeit zwischen der Teilsequenz und der voreingestellten Synchronisationssequenz (11) angibt; und
        Bestimmen eines maximalen Werts von Korrelationsspitzen zwischen allen Teilsequenzen der empfangenen Synchronisationssequenz und der voreingestellten Synchronisationssequenz (11) als die maximale Korrelationsspitze zwischen der empfangenen Synchronisationssequenz und der voreingestellten Synchronisationssequenz (11);
    Bestimmen (S08), wenn die maximale Korrelationsspitze zwischen der empfangenen Synchronisationssequenz und der voreingestellten Synchronisationssequenz (11) nicht kleiner als ein Bestimmungsschwellenwert ist, dass die Synchronisation zwischen dem Empfangsende und dem Übertragungsende erfolgreich ist; und Empfangen (S11) gültiger Nutzdaten, die der Synchronisationssequenz entsprechen, von dem Übertragungsende.

2. Verfahren nach Anspruch 1, wobei das Bestimmen einer Korrelationsspitze zwischen jeder Teilsequenz der empfangenen Synchronisationssequenz und der voreingestellten Synchronisationssequenz (11) Folgendes umfasst:

    Bestimmen eines Korrelationswerts, der jedem Zeichen in jeder Teilsequenz der empfangenen Synchronisationssequenz entspricht, wobei der Korrelationswert angibt, ob zwei Zeichen gleich sind, ein Korrelationswert, der einem i-ten Zeichen in einer m-ten Teilsequenz entspricht, ein Korrelationswert zwischen dem i-ten Zeichen in der m-ten Teilsequenz und einem (P-m+i)-ten Zeichen in der voreingestellten Synchronisationssequenz (11) ist und i eine positive Ganzzahl nicht größer als m ist; und
    Hinzufügen von Korrelationswerten in einem Korrelationswertsatz, um die Korrelationsspitze zwischen jeder Teilsequenz und der voreingestellten Synchronisationssequenz (11) zu erlangen, wobei der Korrelationswertsatz den Korrelationswert umfasst, der jedem Zeichen in jeder Teilsequenz entspricht.

3. Verfahren nach Anspruch 2, wobei ein Korrelationswert zwischen einem i-ten Zeichen in jeder Teilsequenz und dem (P-m+i)-ten Zeichen in der voreingestellten Synchronisationssequenz (11) ein Produkt oder ein Exklusiv-ODER-Wert des i-ten Zeichens in jeder Teilsequenz und des (P-m+i)-ten Zeichens in der voreingestellten Synchronisationssequenz (11) ist.

4. Verfahren nach einem der Ansprüche 1 bis 3, wobei das Verfahren ferner Folgendes umfasst:
wenn die maximale Korrelationsspitze zwischen der empfangenen Synchronisationssequenz und der voreingestellten Synchronisationssequenz (11) kleiner als der Bestimmungsschwellenwert ist, Anpassen des Bestimmungsschwellenwerts, bis ein angepasster Bestimmungsschwellenwert nicht größer als die maximale Korrelationsspitze ist oder der angepasste Bestimmungsschwellenwert nicht innerhalb eines Schwellenwertbereichs liegt, wobei eine Obergrenze des Schwellenwertbereichs die maximale Korrelationsspitze ist und eine Untergrenze des Schwellenwertbereichs ein zweiter maximaler Wert der Korrelationsspitzen zwischen allen Teilsequenzen der empfangenen Synchronisationssequenz und der voreingestellten Synchronisationssequenz (11) ist.

5. Verfahren nach Anspruch 4, wobei ein anfänglicher Wert des Bestimmungsschwellenwerts ein Wert zwischen dem maximalen Wert und dem zweiten maximalen Wert der Korrelationsspitzen zwischen allen Teilsequenzen der voreingestellten Synchronisationssequenz (11) und der voreingestellten Synchronisationssequenz (11) ist.

6. Verfahren nach einem der Ansprüche 1 bis 5, wobei die Synchronisationssequenz mindestens eine einer Protokollsequenz, einer Barker-Codesequenz, einer Pseudozufallscodesequenz, einer M-Sequenz und einer ZC-Sequenz ist.

7. Elektronische Vorrichtung (100), umfassend einen oder mehrere Prozessoren (20, 110), einen oder mehrere Speicher und eine oder mehrere Datenübertragungsschnittstellen, wobei die eine oder die mehreren Datenübertragungsschnittstellen und der eine oder die mehreren Speicher separat mit dem einen oder den mehreren Prozessoren (20, 110) gekoppelt sind;

    die eine oder die mehreren Datenübertragungsschnittstellen dazu konfiguriert sind, Daten zwischen einem Empfangsende und einem Übertragungsende zu übertragen;
    der eine oder die mehreren Speicher dazu konfiguriert sind, einen Computerprogrammcode zu speichern, wobei der Computerprogrammcode Computeranweisungen umfasst; und
    der Prozessor (20, 110) dazu konfiguriert ist, die Anweisungen aufzurufen, um die folgenden Vorgänge durchzuführen:

    Empfangen, über die Datenübertragungsschnittstelle, einer Synchronisationssequenz von dem Übertragungsende, wobei die Synchronisationssequenz zur Synchronisation zwischen dem Empfangsende und dem Übertragungsende verwendet wird; Bestimmen einer maximalen Korrelationsspitze zwischen der empfangenen Synchronisationssequenz und einer voreingestellten Synchronisationssequenz (11), wobei die voreingestellte Synchronisationssequenz (11) die gleiche wie die Synchronisationssequenz ist, die durch das Übertragungsende gesendet wird, und die maximale Korrelationsspitze eine Ähnlichkeit zwischen der empfangenen Synchronisationssequenz und der voreingestellten Synchronisationssequenz (11) angibt, umfassend:

Bestimmen einer Korrelationsspitze zwischen jeder Teilsequenz der empfangenen Synchronisationssequenz und der voreingestellten Synchronisationssequenz (11), wobei die Teilsequenz eine Sequenz ist, die durch erste n Zeichen in der empfangenen Synchronisationssequenz gebildet wird, n eine positive Ganzzahl nicht größer als P ist, P eine Länge der empfangenen Synchronisationssequenz ist und die Korrelationsspitze zwischen der Teilsequenz und der voreingestellten Synchronisationssequenz (11) eine Ähnlichkeit zwischen der Teilsequenz und der voreingestellten Synchronisationssequenz (11) angibt; und Bestimmen eines maximalen Werts von Korrelationsspitzen zwischen allen Teilsequenzen der empfangenen Synchronisationssequenz und der voreingestellten Synchronisationssequenz (11) als die maximale Korrelationsspitze zwischen der empfangenen Synchronisationssequenz und der voreingestellten Synchronisationssequenz (11); Bestimmen, wenn die maximale Korrelationsspitze zwischen der empfangenen Synchronisationssequenz und der voreingestellten Synchronisationssequenz (11) nicht kleiner als ein Bestimmungsschwellenwert ist, dass die Synchronisation zwischen dem Empfangsende und dem Übertragungsende erfolgreich ist; und Empfangen, über die Datenübertragungsschnittstelle, gültiger Nutzdaten, die der Synchronisierungssequenz entsprechen, von dem Übertragungsende.

8. Elektronische Vorrichtung (100) Verfahren nach Anspruch 7, wobei das Bestimmen, durch den Prozessor (20, 110), einer Korrelationsspitze zwischen jeder Teilsequenz der empfangenen Synchronisationssequenz und der voreingestellten Synchronisationssequenz (11) Folgendes umfasst:

Bestimmen eines Korrelationswerts, der jedem Zeichen in jeder Teilsequenz der empfangenen Synchronisationssequenz entspricht, wobei der Korrelationswert angibt, ob zwei Zeichen gleich sind, ein Korrelationswert, der einem i-ten Zeichen in einer m-ten Teilsequenz entspricht, ein Korrelationswert zwischen dem i-ten Zeichen in der m-ten Teilsequenz und einem (P-m+i)-ten Zeichen in der voreingestellten Synchronisationssequenz (11) ist und i eine positive Ganzzahl nicht größer als m ist; und Hinzufügen von Korrelationswerten in einem Korrelationswertsatz, um die Korrelationsspitze zwischen jeder Teilsequenz und der voreingestellten Synchronisationssequenz (11) zu erlangen, wobei der Korrelationswertsatz den Korrelationswert umfasst, der jedem Zeichen in jeder Teilsequenz entspricht.

9. Elektronische Vorrichtung (100) nach Anspruch 8, wobei ein Korrelationswert zwischen einem i-ten Zeichen in jeder Teilsequenz und dem (P-m+i)-ten Zeichen in der voreingestellten Synchronisationssequenz (11) ein Produkt oder ein Exklusiv-ODER-Wert des i-ten Zeichens in jeder Teilsequenz und des (P-m+i)-ten Zeichens in der voreingestellten Synchronisationssequenz (11) ist.

10. Elektronische Vorrichtung (100) nach einem der Ansprüche 7 bis 9, wobei der Prozessor (20, 110) ferner zu Folgendem konfiguriert ist:
wenn die maximale Korrelationsspitze zwischen der empfangenen Synchronisationssequenz und der voreingestellten Synchronisationssequenz (11) kleiner als der Bestimmungsschwellenwert ist, Anpassen des Bestimmungsschwellenwerts, bis ein angepasster Bestimmungsschwellenwert nicht größer als die maximale Korrelationsspitze ist oder der angepasste Bestimmungsschwellenwert nicht innerhalb eines Schwellenwertbereichs liegt, wobei eine Obergrenze des Schwellenwertbereichs die maximale Korrelationsspitze ist und eine Untergrenze des Schwellenwertbereichs ein zweiter maximaler Wert der Korrelationsspitzen zwischen allen Teilsequenzen der empfangenen Synchronisationssequenz und der voreingestellten Synchronisationssequenz (11) ist.

11. Elektronische Vorrichtung (100) nach einem der Ansprüche 7 bis 10, wobei die Synchronisationssequenz mindestens eine einer Protokollsequenz, einer Barker-Codesequenz, einer Pseudozufallscodesequenz, einer M-Sequenz und einer ZC-Sequenz ist.

12. Computerspeichermedium, umfassend Computeranweisungen, wobei, wenn die Computeranweisungen auf einer elektronischen Vorrichtung (100) ausgeführt werden, es der elektronischen Vorrichtung (100) ermöglicht wird, das Datensynchronisationsverfahren nach einem der Ansprüche 1 bis 6 durchzuführen.

## Revendications

1. Procédé de synchronisation de données, appliqué à une extrémité de réception, dans lequel le procédé comprend :

la réception (S04) d'une séquence de synchronisation à partir d'une extrémité de transmission, dans lequel la séquence de synchronisation est utilisée pour une synchronisation entre l'extrémité de réception et l'extrémité de transmission ;

la détermination (S06) d'un pic de corrélation maximal entre la séquence de synchronisation reçue et une séquence de synchronisation prédéfinie (11), dans lequel la séquence de synchronisation prédéfinie (11) est identique à la séquence de synchronisation envoyée par l'extrémité de transmission, et le pic de corrélation maximal indique une similarité entre la séquence de synchronisation reçue et la séquence de synchronisation prédéfinie (11), comprenant :

la détermination (S052) d'un pic de corrélation entre chaque sous-séquence de la séquence de synchronisation reçue et la séquence de synchronisation prédéfinie (11), dans lequel la sous-séquence est une séquence formée par les n premiers caractères dans la séquence de synchronisation reçue, n est un entier positif non supérieur à P, P est une longueur de la séquence de synchronisation reçue, et le pic de corrélation entre la sous-séquence et la séquence de synchronisation prédéfinie (11) indique une similarité entre la sous-séquence et la séquence de synchronisation prédéfinie (11) ; et

la détermination d'une valeur maximale de pics de corrélation entre toutes les sous-séquences de la séquence de synchronisation reçue et la séquence de synchronisation prédéfinie (11) comme pic de corrélation maximal entre la séquence de synchronisation reçue et la séquence de synchronisation prédéfinie (11) ;

la détermination (S08), lorsque le pic de corrélation maximal entre la séquence de synchronisation reçue et la séquence de synchronisation prédéfinie (11) n'est pas inférieur à un seuil de détermination, que la synchronisation entre l'extrémité de réception et l'extrémité de transmission réussit ; et

la réception (S11) de données de charge utile valides correspondant à la séquence de synchronisation à partir de l'extrémité de transmission.

2. Procédé selon la revendication 1, dans lequel la détermination d'un pic de corrélation entre chaque sous-séquence de la séquence de synchronisation reçue et la séquence de synchronisation prédéfinie (11) comprend :

la détermination d'une valeur de corrélation correspondant à chaque caractère dans chaque sous-séquence de la séquence de synchronisation reçue, dans lequel la valeur de corrélation indique si deux caractères sont identiques, une valeur de corrélation correspondant à un $i$-ième caractère dans une $m$-ième sous-séquence est une valeur de corrélation entre le $i$-ième caractère dans la $m$-ième sous-séquence et un $(P-m+i)$-ième caractère dans la séquence de synchronisation prédéfinie (11), et i est un entier positif non supérieur à m ; et

l'ajout de valeurs de corrélation dans un ensemble de valeurs de corrélation, pour obtenir le pic de corrélation entre chaque sous-séquence et la séquence de synchronisation prédéfinie (11), dans lequel l'ensemble de valeurs de corrélation comprend la valeur de corrélation correspondant à chaque caractère dans chaque sous-séquence.

3. Procédé selon la revendication 2, dans lequel une valeur de corrélation entre un $i$-ième caractère dans chaque sous-séquence et le $(P-m+i)$-ième caractère dans la séquence de synchronisation prédéfinie (11) est un produit ou une valeur OU exclusif du $i$-ième caractère dans chaque sous-séquence et du $(P-m+i)$-ième caractère dans la séquence de synchronisation prédéfinie (11).

4. Procédé selon l'une quelconque des revendications 1 à 3, dans lequel le procédé comprend également : lorsque le pic de corrélation maximal entre la séquence de synchronisation reçue et la séquence de synchronisation prédéfinie (11) est inférieur au seuil de détermination, le réglage du seuil de détermination jusqu'à ce qu'un seuil de détermination réglé ne soit pas supérieur au pic de corrélation maximal ou que le seuil de détermination réglé ne soit pas dans une plage de seuil, dans lequel une limite supérieure de la plage de seuil est le pic de corrélation maximal, et une limite inférieure de la plage de seuil est une seconde valeur maximale des pics de corrélation entre toutes les sous-séquences de la séquence de synchronisation reçue et la séquence de synchronisation prédéfinie (11).

5. Procédé selon la revendication 4, dans lequel une valeur initiale du seuil de détermination est une valeur comprise entre la valeur maximale et la seconde valeur maximale des pics de corrélation entre toutes les sous-séquences de la séquence de synchronisation prédéfinie (11) et la séquence de synchronisation prédéfinie (11).

6. Procédé selon l'une quelconque des revendications 1 à 5, dans lequel la séquence de synchronisation est au moins l'une d'une séquence de protocole, d'une séquence de code Barker, d'une séquence de code pseudo-aléatoire, d'une séquence M et d'une séquence ZC.

7. Dispositif électronique (100), comprenant un ou plusieurs processeurs (20, 110), une ou plusieurs mémoires, et une ou plusieurs interfaces de transmission de données, dans lequel les une ou plusieurs interfaces de transmission de données et les une ou plusieurs mémoires sont couplées séparément aux un ou plusieurs processeurs (20, 110) ;

les une ou plusieurs interfaces de transmission de données sont configurées pour transmettre des données entre une extrémité de réception et une extrémité de transmission ;
les une ou plusieurs mémoires sont configurées pour stocker un code de programme informatique, dans lequel le code de programme informatique comprend des instructions informatiques ; et
le processeur (20, 110) est configuré pour invoquer les instructions informatiques afin de réaliser les opérations suivantes :

la réception, à travers l'interface de transmission de données, d'une séquence de synchronisation à partir de l'extrémité de transmission, dans lequel la séquence de synchronisation est utilisée pour une synchronisation entre l'extrémité de réception et l'extrémité de transmission ;
la détermination d'un pic de corrélation maximal entre la séquence de synchronisation reçue et une séquence de synchronisation prédéfinie (11), dans lequel la séquence de synchronisation prédéfinie (11) est identique à la séquence de synchronisation envoyée par l'extrémité de transmission, et le pic de corrélation maximal indique une similarité entre la séquence de synchronisation reçue et la séquence de synchronisation prédéfinie (11), comprenant :

la détermination d'un pic de corrélation entre chaque sous-séquence de la séquence de synchronisation reçue et la séquence de synchronisation prédéfinie (11), dans lequel la sous-séquence est une séquence formée par les n premiers caractères dans la séquence de synchronisation reçue, n est un entier positif non supérieur à P, P est une longueur de la séquence de synchronisation reçue, et le pic de corrélation entre la sous-séquence et la séquence de synchronisation prédéfinie (11) indique une similarité entre la sous-séquence et la séquence de synchronisation prédéfinie (11) ; et
la détermination d'une valeur maximale de pics de corrélation entre toutes les sous-séquences de la séquence de synchronisation reçue et la séquence de synchronisation prédéfinie (11) comme pic de corrélation maximal entre la séquence de synchronisation reçue et la séquence de synchronisation prédéfinie (11) ;
la détermination, lorsque le pic de corrélation maximal entre la séquence de synchronisation reçue et la séquence de synchronisation prédéfinie (11) n'est pas inférieur à un seuil de détermination, que la synchronisation entre l'extrémité de réception et l'extrémité de transmission réussit ; et
la réception, à travers l'interface de transmission de données, de données de charge utile valides correspondant à la séquence de synchronisation à partir de l'extrémité de transmission.

8. Dispositif électronique (100) selon la revendication 7, dans lequel la détermination, par le processeur (20, 110), d'un pic de corrélation entre chaque sous-séquence de la séquence de synchronisation reçue et la séquence de synchronisation prédéfinie (11) comprend :

la détermination d'une valeur de corrélation correspondant à chaque caractère dans chaque sous-séquence de la séquence de synchronisation reçue, dans lequel la valeur de corrélation indique si deux caractères sont identiques, une valeur de corrélation correspondant à un $i^{ième}$ caractère dans une $i^{ième}$ sous-séquence est une valeur de corrélation entre le $i^{ième}$ caractère dans la $m^{ième}$ sous-séquence et un $(P-m+i)^{ième}$ caractère dans la séquence de synchronisation prédéfinie (11), et i est un entier positif non supérieur à m ; et
l'ajout de valeurs de corrélation dans un ensemble de valeurs de corrélation, pour obtenir le pic de corrélation entre chaque sous-séquence et la séquence de synchronisation prédéfinie (11), dans lequel l'ensemble de valeurs de corrélation comprend la valeur de corrélation correspondant à chaque caractère dans chaque sous-séquence.

9. Dispositif électronique (100) selon la revendication 8, dans lequel une valeur de corrélation entre un i-ième caractère dans chaque sous-séquence et le (P-m+i)-ième caractère dans la séquence de synchronisation prédéfinie (11) est un produit ou une valeur OU exclusif du i-ième caractère dans chaque sous-séquence et du (P-m+i)-ième caractère dans la séquence de synchronisation prédéfinie (11).

10. Dispositif électronique (100) selon l'une quelconque des revendications 7 à 9, dans lequel le processeur (20, 110) est également configuré pour :
lorsque le pic de corrélation maximal entre la séquence de synchronisation reçue et la séquence de synchronisation prédéfinie (11) est inférieur au seuil de détermination, régler le seuil de détermination jusqu'à ce qu'un seuil de détermination réglé ne soit pas supérieur au pic de corrélation maximal ou que le seuil de détermination réglé ne soit pas dans une plage de seuil, dans lequel une limite supérieure de la plage de seuil est le pic de corrélation maximal, et une limite inférieure de la plage de seuil est une seconde valeur maximale des pics de corrélation entre toutes les sous-séquences de la séquence de synchronisation reçue et la séquence de synchronisation prédéfinie (11).

11. Dispositif électronique (100) selon l'une quelconque des revendications 7 à 10, dans lequel la séquence de synchronisation est au moins l'une d'une séquence de protocole, d'une séquence de code Barker, d'une séquence de code pseudo-aléatoire, d'une séquence M et d'une séquence ZC.

12. Support de stockage informatique, comprenant des instructions informatiques, dans lequel, lorsque les instructions informatiques sont exécutées sur un dispositif électronique (100), le dispositif électronique (100) est activé pour réaliser le procédé de synchronisation de données selon l'une quelconque des revendications 1 à 6.

## FIG. 1

Processor [20]

Camera interface [21]

Image processing module [22]

Display interface [23]

Camera sensor [10]

Camera interface [11]

Display [30]

Display interface [31]

FIG. 1

## FIG. 2A

Transmit end [201]

Interface of the transmit end [206]

Clock+
Clock−

Data0+
Data0−

DataN+
DataN−

Clock lane [203]

0th data lane [204]

Nth data lane [205]

Receive end [202]

Clock+
Clock−

Data0+
Data0−

DataN+
DataN−

Interface of the receive end [207]

MIPI D-PHY[200]

FIG. 2A

| **Receive end** | **Transmit end** |
|---|---|
| Observe a stop state | Drive a stop state (LP-11) |
| Observe line transmission from LP-11 to LP-01 | Drive a high-speed request state (LP-01), duration: $T_{LPX}$ |
| Observe line transmission from LP-01 to LP-00, and after duration $T_{D\text{-}TERM\text{-}N}$, enable line termination | Drive a bridge state (LP-00), duration: $T_{HS\text{-}PREPARE}$ |
| | Enable a high-speed driver and simultaneously disable a low-power consumption driver |
| Enable HS-RX and wait for duration $T_{HS\text{-}SETTLE}$ (to avoid transmission effects) | Drive HS-0, duration: $T_{HS\text{-}ZERO}$ |
| Start searching for a preamble sequence | |
| | Insert an HS synchronization sequence "00011101" at a rising edge of a clock |
| Identify a preamble sequence "011101" for synchronization | |
| | Continue to transmit high-speed payload data |

FIG. 2B

Transmit
end

Receive end

S01: Insert a synchronization
sequence before transmitting
valid payload data

S02: Wait for the
synchronization sequence of the
transmit end

S03: Send the synchronization
sequence and the valid payload data

S04: Receive the synchronization sequence

S051: Determine each subsequence of the received
synchronization sequence

S052: Determine a correlation peak between each subsequence
of the received synchronization sequence and a preset
synchronization sequence

S06: Determine a maximum correlation peak between the
received synchronization sequence and the preset
synchronization sequence

S10: Adjust the
determining threshold

S07: Determine whether
the maximum correlation peak between
the received synchronization sequence
and the preset synchronization sequence
is not less than a determining
threshold

No

S09: Report
error
information

Yes

S08: Determine that synchronization between the received
synchronization sequence and the preset synchronization
sequence succeeds

S11: Continue to receive valid payload data

FIG. 3

(a)

| 0 | 0 | 0 | 1 | 1 | 1 | 0 | 1 |
|---|---|---|---|---|---|---|---|

Preset synchronization
sequence

Preset synchronization
sequence

Received synchronization
sequence and valid
payload data

| 0 | 0 | 0 | 1 | 0 | 1 | 0 | 1 | 0 | 0 | 1 | 0 | 0 | 0 | 1 | 1 | 1 | ... |
|---|---|---|---|---|---|---|---|---|---|---|---|---|---|---|---|---|---|

Synchronization
sequence

Payload data

Bit error

(b)

| 0 | 0 | 0 | 1 | 1 | 1 | 0 | 1 |
|---|---|---|---|---|---|---|---|

Preset synchronization
sequence

Preset synchronization
sequence

Received synchronization
sequence and valid
payload data

| ? | ? | ? | ? | ? | ? | ? | ? | ? | ? | ? | ? | ? | ? | ? | ? | ? | ... |
|---|---|---|---|---|---|---|---|---|---|---|---|---|---|---|---|---|---|

Synchronization
sequence

Payload data

FIG. 4A

FIG. 4B

FIG. 5

FIG. 6

(a)

| Correlation peak | | | | | | | |
|---|---|---|---|---|---|---|---|
| 4 | 2 | 2 | 1 | 1 | 0 | 0 | 0 |

4

Determining threshold

2  2

1  1

0  0  0

| 0 | 0 | 0 | 1 | 1 | 1 | 0 | 1 |
|---|---|---|---|---|---|---|---|

Preset synchronization sequence

Received synchronization sequence

(b)

| Correlation peak | | | | | | | |
|---|---|---|---|---|---|---|---|
| 3 | 1 | 2 | 0 | 1 | 0 | 0 | 0 |

3

Determining threshold

2

1

1

0   0  0  0

| 0 | 0 | 0 | 1 | *0* | 1 | 0 | 1 |
|---|---|---|---|---|---|---|---|

Preset synchronization sequence

Received synchronization sequence

FIG. 7

$c'_P$
$c_m$ — Exclusive OR gate P

$c'_{P-1}$
$c_{m-1}$ — Exclusive OR gate P–1

$c'_{P-m+2}$
$c_2$ — Exclusive OR gate P–m+2

$c'_{P-m+1}$
$c_1$ — Exclusive OR gate P–m+1

$c'_2$ — Exclusive OR gate 2

$c'_1$ — Exclusive OR gate 1

Adder

Correlation peak between an $m^{th}$ subsequence and a preset synchronization sequence

FIG. 8

| Correlation peak | | | | | | | |
|---|---|---|---|---|---|---|---|
| 8 | 1 | 0 | −3 | 0 | −1 | 0 | −1 |

— First line

— Second line

| Exclusive OR value | Exclusive OR value | Exclusive OR value | Exclusive OR value | Exclusive OR value | Exclusive OR value | Exclusive OR value | Exclusive OR value |
|---|---|---|---|---|---|---|---|

| 0 0 0 1 1 1 0 1 | 0 0 0 1 1 1 0 1 | 0 0 0 1 1 1 0 1 | 0 0 0 1 1 1 0 1 | 0 0 0 1 1 1 0 1 | 0 0 0 1 1 1 0 1 | 0 0 0 1 1 1 0 1 | 0 0 0 1 1 1 0 1 |
|---|---|---|---|---|---|---|---|
| Synchronization sequence | Synchronization sequence | Synchronization sequence | Synchronization sequence | Synchronization sequence | Synchronization sequence | Synchronization sequence | Synchronization sequence |

◄— Preset synchronization sequence

◄— Received synchronization sequence

FIG. 9

(a)

Correlation peak

| 8 | 1 | 0 | −3 | 0 | −1 | 0 | −1 |
|---|---|---|----|---|----|---|----|

8

— · — · — · — Determining
threshold

1
0    0
    −3    −1    0    −1

Preset
synchronization
sequence

| 0 | 0 | 0 | 1 | 1 | 1 | 0 | 1 |
|---|---|---|---|---|---|---|---|

Received
synchronization
sequence

(b)

Correlation peak

| 6 | −1 | 2 | −5 | 0 | −1 | 0 | −1 |
|---|----|---|----|---|----|---|----|

6

— · — · — Determining
threshold

2

−1        0        0
    −5        −1        −1

Preset
synchronization
sequence

| 0 | 0 | 0 | 1 | *0* | 1 | 0 | 1 |
|---|---|---|---|-----|---|---|---|

Received
synchronization
sequence

FIG. 10

| Correlation peak | | | | | | | |
|---|---|---|---|---|---|---|---|
| 8 | 4 | 3 | 1 | 2 | 1 | 1 | 0 |

— First line

| 1 1 1 1 1 1 1 1 | 1 1 0 1 1 0 0 | 1 0 0 1 0 1 | 0 0 0 0 1 | 0 0 1 1 | 0 1 0 | 1 0 | 0 |

— Second line

| Exclusive OR value | Exclusive OR value | Exclusive OR value | Exclusive OR value | Exclusive OR value | Exclusive OR value | Exclusive OR value | Exclusive OR value |
|---|---|---|---|---|---|---|---|
| 0 0 0 1 1 1 0 1 | 0 0 0 1 1 1 0 1 | 0 0 0 1 1 1 0 1 | 0 0 0 1 1 1 0 1 | 0 0 0 1 1 1 0 1 | 0 0 0 1 1 1 0 1 | 0 0 0 1 1 1 0 1 | 0 0 0 1 1 1 0 1 |
| Preset synchronization sequence | Preset synchronization sequence | Preset synchronization sequence | Preset synchronization sequence | Preset synchronization sequence | Preset synchronization sequence | Preset synchronization sequence | Preset synchronization sequence |

← Preset synchronization sequence

← Received synchronization sequence

FIG. 11

EP 4 290 800 B1

(a)

| Correlation peak | | | | | | | |
|---|---|---|---|---|---|---|---|
| 8 | 4 | 3 | 1 | 2 | 1 | 1 | 0 |

Determining threshold

| 0 | 0 | 0 | 1 | 1 | 1 | 0 | 1 |
|---|---|---|---|---|---|---|---|
| Received synchronization sequence | | | | | | | |

Preset synchronization sequence

(b)

| Correlation peak | | | | | | | |
|---|---|---|---|---|---|---|---|
| 7 | 3 | 4 | 0 | 2 | 1 | 1 | 0 |

Determining threshold

| 0 | 0 | 0 | 1 | 0 | 1 | 0 | 1 |
|---|---|---|---|---|---|---|---|
| Received synchronization sequence | | | | | | | |

Preset synchronization sequence

FIG. 12

(a)

Maximum correlation peak value

Determining threshold

Preset synchronization sequence

Received synchronization sequence and valid payload data

| 0 | 0 | 0 | 1 | 1 | 1 | 0 | 1 | 0 | 0 | 1 | 0 | 0 | 0 | 1 | 1 | 1 | ··· |

| Synchronization sequence | Payload data |

(b)

Maximum correlation peak value

Determining threshold

Preset synchronization sequence

Received synchronization sequence and valid payload data

| 1 | 1 | 1 | 1 | 1 | 0 | 0 | 1 | 1 | 0 | 1 | 0 | 1 | 1 | 1 | 1 | 1 | 0 | 0 | 1 | 1 | 0 | ··· |

| Synchronization sequence | Payload data |

FIG. 13

| Length | Sequence | Correlation peak | Correlation peak representation |
|---|---|---|---|
| 2 | +,+ | 2,1 | Determining threshold |
| | –,+ | 2,–1 | Determining threshold |
| 3 | +,+,– | 3,0,–1 | Determining threshold |
| 4 | +,+,–,+ | 4,–1,0,1 | Determining threshold |
| | +,+,+,– | 4,1,0,–1 | Determining threshold |
| 5 | +,+,+,–,+ | 5,0,1,0,1 | Determining threshold |
| 7 | +,+,+,–,–,+,– | 7,0,–1,0,–1,0,–1 | Determining threshold |
| 11 | +,+,+,–,–,–,+,–,–,+,– | 11,0,–1,0,–1,0,–1,0,–1,0,–1 | Determining threshold |
| 13 | +,+,+,+,+,–,–,+,+,–,+,–,+ | 13,0,1,0,1,0,1,0,1,0,1,0,1 | Determining threshold |

FIG. 14

FIG. 15

EP 4 290 800 B1

FIG. 16

Electronic device 100

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110329850
- US 2021036898 A1
- US 4847877 A
- US 2015003570 A1

**Non-patent literature cited in the description**

- **ELDON J ED - PULKA ANDRZEJ et al.** APPLICATIONS OF THE DIGITAL CORRELATOR. MICROPROCESSORS AND MICROSYSTEMS, IPC BUSINESS PRESS LTD., 01 May 1988, vol. 12, 214-223